# EUROPEAN PATENT APPLICATION

(11) **EP 4 769 137 A1**
(43) Date of publication of application: **01.07.2026**
(21) Application number: 25824766.7
(22) Date of filing: 12.05.2025
(51) Int. Cl.: G06F 9/451

(54) **OPERATION RESPONSE METHOD, TERMINAL DEVICE AND STORAGE MEDIUM**

(30) Priority: 29.06.2024 CN 202410874929
(71) Applicant: Honor Device Co., Ltd., Shenzhen, Guangdong 518040 (CN)
(72) Inventor: WU, Xiang, Shenzhen, Guangdong 518040 (CN)
(74) Representative: Goddar, Heinz J.
(86) International application number: PCT/CN2025/094418
(87) International publication number: WO 2026/001378

(57) **Abstract**

This application discloses an operation response method, a terminal device, and a storage medium, and pertains to the field of terminal technologies. The method includes: displaying a first interface, where the first interface includes a desktop; receiving a first slide operation acting on the pressure-sensitive key; and dropping down and displaying the notification center and/or the control center from a top of the first interface in response to the first slide operation. In this way, a user may drop down the notification center and/or the control center by sliding a pressure-sensitive key, thereby expanding operation manners of dropping down the notification center and/or the control center, and providing diversified operation manners of dropping down the notification center and the control center for the user, so that operations by the user are more convenient and efficient.

## Description

This application claims priority to Chinese Patent Application No. 202410874929.0, filed with the China National Intellectual Property Administration on June 29, 2024 and entitled "OPERATION RESPONSE METHOD, TERMINAL DEVICE, AND STORAGE MEDIUM", which is incorporated herein by reference in its entirety.

### TECHNICAL FIELD

This application relates to the field of terminal technologies, and in particular, to an operation response method, a terminal device, and a storage medium.

### BACKGROUND

With development of terminal devices, for ease of operations by a user, a terminal device such as a mobile phone or a tablet computer is generally provided with a notification center and a control center. The notification center may be an entry for managing push information from an application in the terminal device or displaying resident status information. The control center may be an entry for controlling a device status.

Currently, the user may call out the notification center or the control center by sliding down at the top of a screen. For example, the user may slide down at the left top of the screen to drop down the notification center, and slide down at the right top of the screen to drop down the control center. However, such an operation of dropping down the notification center or the control center has some limitations and is not highly flexible.

### SUMMARY

This application provides an operation response method, a terminal device, and a storage medium, to expand operation manners of dropping down a notification center or a control center, improve diversity and flexibility of operations, and improve convenience of user operations. The technical solutions are as follows:

According to a first aspect, an operation response method is provided. The method includes: displaying a first interface, where the first interface includes a desktop; receiving a first slide operation acting on the pressure-sensitive key; and dropping down and displaying the notification center and/or the control center from a top of the first interface in response to the first slide operation.

In this way, a user may drop down the notification center and/or the control center by sliding a pressure-sensitive key, thereby expanding operation manners of dropping down the notification center and/or the control center, and providing diversified drop-down notification manners for the user. In addition, compared with a drop-down notification manner in which a finger of a user slides down from the top of a screen, an operation manner of dropping down the notification center and/or the control center by using a pressure-sensitive key is smoother and more convenient. For example, the operation manner may be implemented by using a single hand. Therefore, user operations can be facilitated, and user experience can be improved.

The pressure-sensitive key is a key that can implement an operation through pressure sensing, and may implement a key function by detecting the pressure on the key. For example, the pressure-sensitive key may recognize a press operation by the user by detecting a pressure value on the key, for example, recognize an operation by the user, such as a light-tap, a light-press, or a heavy-press. For another example, the pressure-sensitive key may further recognize a slide operation by the user on the key by detecting pressures at different positions on the key.

In an embodiment, a first side of the terminal device is provided with a first pressure-sensitive key, and a second side is provided with a second pressure-sensitive key. For example, a left pressure-sensitive key is disposed on a left side, and a right pressure-sensitive key is disposed on a right side. In this way, it is convenient for the user to separately drop down the notification center and the control center by using the pressure-sensitive keys on the two sides, thereby further improving convenience of a drop-down operation.

In an embodiment, the pressure-sensitive key may be disposed on a metal bezel on a side of the terminal device, or may be disposed on a display screen or a rear housing on a side. A position at which the pressure-sensitive key is disposed on a side is not limited in this embodiment of this application.

In an embodiment, a key surface of the pressure-sensitive key may be integrally formed with the metal bezel. For example, a partial region of the metal bezel is formed as the key surface of the pressure-sensitive key. In this way, damage to the integrity of the appearance of the metal bezel can be avoided, which not only can improve the aesthetics of the device, but also can improve the waterproof performance and the service life of the pressure-sensitive key.

In an embodiment, the side provided with the pressure-sensitive key does not have a physical key. That is, in this embodiment of this application, no physical key may be disposed on a side of the device, to improve the waterproof performance and the service life of the pressure-sensitive key.

In an embodiment, the notification center is dropped down from the top of the first interface and displayed in response to the first slide operation acting on the first pressure-sensitive key; and the control center is dropped down from the top of the first interface and displayed in response to the first slide operation acting on the second pressure-sensitive key.

In this way, the user can separately drop down the notification center and the control center by using the pressure-sensitive keys on the two sides, thereby further improving convenience of a drop-down operation.

The first slide operation may be a slide operation along a preset direction, for example, a pressure-sensitive key along a length direction or a width direction of the pressure-sensitive key. For example, the first slide operation is a slide-up operation.

In an embodiment, before the receiving a first slide operation acting on the pressure-sensitive key, a first press operation acting on the pressure-sensitive key may be further received, and the notification center and/or the control center is dropped down from the top of the first interface and displayed in response to the first slide operation acting on the pressure-sensitive key after the first press operation.

The first press operation is a press operation whose press pressure satisfies a first preset condition, and/or whose press duration is greater than or equal to a first duration threshold. For example, the first press operation may be a light long-press operation. For example, the first preset condition may be that the press pressure is greater than or equal to a first preset pressure threshold, or is greater than or equal to a first preset pressure threshold and is less than a second preset pressure threshold. The first preset pressure threshold and the second preset pressure threshold may be preset as required.

That is, an operation of dropping down the notification center and/or the control center is a first press operation + a slide operation, and the user needs to first press and then slide a pressure-sensitive key, to drop down the notification center and/or the control center. In this way, a probability of accidentally dropping down the notification center and/or the control center caused by an accidental slide touch can be reduced, and drop-down accuracy can be improved.

In an embodiment, after the user performs the first press operation on the pressure-sensitive key, a dynamic focus effect may be further displayed at the top of the screen of the terminal device in response to the first press operation. For example, a dynamic focus effect is displayed in a top status bar. The dynamic focus effect may be a highlighting dynamic effect, or may be another dynamic effect. This is not limited in this embodiment of this application.

By displaying the dynamic focus effect at the top of the screen, the user may be instructed to drop down the notification center and/or the control center by using a pressure-sensitive key.

In an embodiment, a dynamic focus effect is displayed in a first partial region of a status bar of the first interface when the pressure-sensitive key is disposed on a left side of the terminal device, where the first partial region is located on a left side of the status bar; and a dynamic focus effect is displayed in a second partial region of a status bar of the first interface when the pressure-sensitive key is disposed on a right side of the terminal device, where the second partial front region is located on a right side of the status bar.

For example, a dynamic focus effect is displayed in a left region of a top status bar in response to a light long-press gesture on a left pressure-sensitive key; and a dynamic focus effect is displayed in a right region of a top status bar in response to a light long-press gesture on a right pressure-sensitive key.

By displaying the dynamic focus effect in the left region of the status bar, the user may be reminded that the notification center may be dropped down by using a pressure-sensitive key; and by displaying the dynamic focus effect in the right region of the status bar, the user may be reminded that the control center may be dropped down by using a pressure-sensitive key. In this way, user experience can be improved.

In an embodiment, in response to the first press operation, the pressure-sensitive key may be further controlled to perform a vibrational feedback, to improve interaction experience of the user.

In an embodiment, after the notification center and/or the control center are dropped down from the top of the first interface and displayed, a second slide operation acting on the pressure-sensitive key may be further received, and displaying of the notification center and/or the control center is canceled in response to the second touch operation.

In this way, after the notification center and/or the control center is dropped down, the user may further collapse the notification center and/or the control center by sliding a pressure-sensitive key, thereby further improving convenience of user operations.

The second slide operation may be a slide operation whose slide direction is opposite to that of the first slide operation. For example, the first slide operation is a slide-down operation, and the second slide operation is a slide-up operation.

In an embodiment, before the receiving a second slide operation acting on the pressure-sensitive key, a second press operation acting on the pressure-sensitive key may be further received, and then displaying of the notification center and/or the control center is canceled in response to the second slide operation acting on the pressure-sensitive key after the second press operation.

The second press operation is a press operation whose press pressure satisfies a second preset condition, and/or whose press duration is greater than or equal to a second duration threshold. For example, the second preset condition may be that the press pressure is greater than or equal to a third preset pressure threshold, or is greater than or equal to a first preset pressure threshold and is less than a fourth preset pressure threshold. The second preset pressure threshold and the fourth preset pressure threshold may be preset as required.

That is, an operation of dropping down the notification center and/or the control center is a second press operation + a second slide operation, and the user needs to first press and then slide a pressure-sensitive key, to collapse the notification center and/or the control center. In this way, accidental collapsing caused by an accidental slide touch can be reduced, and operation accuracy can be improved.

In an embodiment, alternatively, in an audio/video playback scenario, control may be performed by using a pressure-sensitive key.

As an example, a second interface may be displayed, where the second interface is an audio/video playback interface; a slide operation acting on the pressure-sensitive key is received; and a currently played audio/video is switched to a previous audio/video or a next audio/video of the current audio/video in response to a slide operation on the pressure-sensitive key.

The audio/video may be an audio or a video, and the video may be a short-form video, a long-form video, or the like.

In this way, a user may quickly switch an audio/video by sliding a pressure-sensitive key, thereby expanding audio/video switching manners, and providing diversified operation manners of switching an audio/video for the user. In addition, compared with a manner in which a user slides on a screen by using a finger to switch an audio/video, an operation manner of switching an audio/video by using a pressure-sensitive key is smoother and more convenient. For example, the operation manner may be implemented by using a single hand. Therefore, user operations can be facilitated, and user experience can be improved.

As an example, the audio/video playback interface is a short-form video playback interface, a page of the short-form video is gradually moved out from a top of the second interface and a page of the next short-form video of the short-form video is gradually moved in from a bottom of the second interface in response to a third slide operation acting on the pressure-sensitive key, to switch the short-form video to the next short-form video of the short-form video; and a page of the short-form video is gradually moved out from the bottom of the second interface and the previous short-form video of the short-form video is gradually moved out from the top of the second interface in response to a fourth slide operation acting on the pressure-sensitive key, to switch the short-form video to the previous short-form video of the short-form video.

A slide direction of the third slide operation is opposite to a slide direction of the fourth slide operation. For example, the third slide operation and the fourth slide operation are respectively a slide-up operation and a slide-down operation.

In this way, a current short-form video page may be gradually switched to a previous or next short-form video page by sliding a pressure-sensitive key, thereby implementing a page flip effect of a short-form video.

In an embodiment, alternatively, in a camera shooting scenario, control may be performed by using a pressure-sensitive key.

As an example, a third interface is displayed, where the third interface is a camera shooting interface; a slide operation acting on the pressure-sensitive key is received; and a focal length of a camera is adjusted in response to the slide operation on the pressure-sensitive key.

The camera shooting interface may be a photographing interface, a shooting interface, or the like.

In this way, the user may quickly adjust the focal length by sliding a pressure-sensitive key, thereby expanding operation manners of adjusting the focal length, and providing diversified focal length adjustment operations for the user. In addition, compared with a focal length adjustment manner in which a user uses two fingers to open or pinch on a screen, an operation manner of adjusting the focal length by using a pressure-sensitive key is smoother and more convenient. For example, the operation manner may be implemented by using a single hand or a single finger. Therefore, user operations can be facilitated, and user experience can be improved.

In an embodiment, the focal length of the camera is increased in response to a fifth slide operation acting on the pressure-sensitive key; and the focal length of the camera is reduced in response to a sixth slide operation acting on the pressure-sensitive key.

A slide direction of the sixth slide operation is opposite to a slide direction of the fifth slide operation. For example, the fifth slide operation and the sixth slide operation are respectively a slide-up operation and a slide-down operation.

In an embodiment, alternatively, in an image browsing scenario, control may be performed by using a pressure-sensitive key.

As an example, a fourth interface may be displayed, where the fifth interface includes a first image; a slide operation acting on the pressure-sensitive key is received; and the first image is zoomed and displayed in response to the slide operation on the pressure-sensitive key.

In this way, the user may quickly zoom an image by sliding a pressure-sensitive key, thereby expanding zooming manners, and providing diversified zooming operations for the user. In addition, compared with a zooming manner in which a user uses two fingers to open or pinch on a screen, an operation manner of zooming by using a pressure-sensitive key is smoother and more convenient. For example, the operation manner may be implemented by using a single hand or a single finger. Therefore, user operations can be facilitated, and user experience can be improved.

In an embodiment, the first image is zoomed in and displayed in response to a seventh slide operation acting on the pressure-sensitive key; and the first image is zoomed out and displayed in response to an eighth slide operation acting on the pressure-sensitive key. A slide direction of the eighth slide operation is opposite to a slide direction of the seventh slide operation. For example, the seventh slide operation and the eighth slide operation are respectively a slide-up operation and a slide-down operation.

In an embodiment, an operating system of the terminal device includes an input reader and a system user interface.

In the process of dropping down and displaying the notification center and/or the control center from a top of the first interface in response to the first slide operation, the input reader may receive slide data reported by a pressure-sensitive device driver corresponding to the pressure-sensitive key, and generate a screen slide event according to the slide data, where the slide data is slide data generated by the first slide operation acting on the pressure-sensitive key; the input reader sends the screen slide event to the system user interface; and the system user interface drops down and displays the notification center and/or the control center from the top of the first interface in response to the screen slide event.

In this way, a slide operation on a pressure-sensitive key may be mapped to a slide operation on a screen, so that the terminal device may respond to the slide operation on the pressure-sensitive key by responding to the slide operation on the screen, thereby improving response performance.

In an embodiment, the generating, by the input reader, a screen slide event according to the slide data includes: processing, by the input reader, the slide data according to a preset mapping parameter, to obtain an event parameter of the screen slide event, where the preset mapping parameter is used for mapping a slide event on the pressure-sensitive key to a slide event on a screen; and generating, by the input reader, the screen slide event according to the event parameter.

The preset mapping parameter is a preset related parameter used for mapping a slide event on the pressure-sensitive key to a slide event on a screen, and may include, for example, at least one of the following parameters: a start point, a slide finger requirement (whether to be a single finger or a plurality of fingers), a slide direction, a slide gesture, a slide distance mapping ratio, and the like. The mapping parameter herein affects creation of a subsequent slide event and a response to the slide event.

As an example, in different scenarios, different mapping parameters may be updated, to simulate a slide event on a pressure-sensitive key as different slide events on a screen. For example, in a scenario of dropping down a notification such as a desktop, a slide event on a pressure-sensitive key is converted into a slide event of sliding downward from a position close to the top of a screen as a start point, to simulate a notification drop-down operation; in a short-form video scenario such as Douyin, a slide event on a pressure-sensitive key is converted into a slide event of sliding from the middle of a screen, to simulate a page flip operation; in a camera scenario, a slide event on a pressure-sensitive key is converted into a slide event of two-finger opening or two-finger pinching on a screen, to simulate a focal length adjustment operation; and in scenarios such as a gallery and a map, a slide event on a pressure-sensitive key is converted into a slide event of two-finger opening or two-finger pinching on a screen, to simulate an operation such as zooming.

In an embodiment, when the pressure-sensitive key is the pressure-sensitive key disposed on the first side of the terminal device, the screen slide event is a slide-down event on a left side of the screen; and the system user interface may drop down and display the notification center from the top of the first interface in response to the screen slide event.

In an embodiment, when the pressure-sensitive key is the pressure-sensitive key disposed on the second side of the terminal device, the screen slide event is a slide-down event on a right side of the screen; and the system user interface may drop down the control center from the top of the first interface in response to the screen slide event.

In an embodiment, the operating system further includes a phone window manager, and before the receiving a first slide operation acting on the pressure-sensitive key, the pressure-sensitive key receives a first press event, where the first press operation is a press operation whose press duration is greater than or equal to the first duration threshold; the input reader receives an original key event reported by the pressure-sensitive device driver corresponding to the pressure-sensitive key, and generates a first key event according to the original key event, where the original key event is a key event generated by the first press operation acting on the pressure-sensitive key; the input reader sends the first key event to the phone window manager; the phone window manager performs gesture detection according to the first key event, and sends a first notification to the system user interface when a long-press gesture is detected, where the first notification is used for indicating that the long-press gesture is detected on the pressure-sensitive key, and the long-press gesture is a press gesture of continuously pressing the pressure-sensitive key for the first duration threshold; and the system user interface displays a dynamic focus effect at the top of the first interface in response to the first notification.

In an embodiment, the first key event is a first key down event, and the performing, by the phone window manager, gesture detection according to the first key event includes: determining, by the phone window manager, that the long-press gesture is detected if a first key up event corresponding to the first key down event is not received within a first duration threshold after the first key down event is received; or determining, by the phone window manager, that the long-press gesture is not detected if a first key up event corresponding to the first key down event is received within a first duration threshold after the first key down event is received.

In an embodiment, the displaying, by the system user interface, a dynamic focus effect at the top of the first interface in response to the first notification includes: displaying a dynamic focus effect in a first partial region of a status bar of the first interface when the first notification indicates that the long-press gesture is detected on the first pressure-sensitive key, where the first pressure-sensitive key is a pressure-sensitive key disposed on the first side of the terminal device, and the first partial region is located on a left side of the status bar; and displaying a dynamic focus effect in a second partial region of a status bar of the first interface when the first notification indicates that the long-press gesture is detected on the second pressure-sensitive key, where the second pressure-sensitive key is a pressure-sensitive key disposed on the second side of the terminal device, and the second partial region is located on a right side of the status bar.

In an embodiment, the operating system further includes a vibrator manager service, and the phone window manager may further send a second notification to the vibration management server when the long-press gesture is detected, where the second notification is used for indicating that the long-press gesture is detected; and the vibration manager service controls, according to the second notification, the pressure-sensitive key to vibrate, to improve interaction experience of the user.

According to a second aspect, an operation response apparatus is provided. The operation response apparatus has a function of implementing a behavior in the operation response method according to the first aspect. The operation response apparatus includes at least one module, and the at least one module is configured to implement the operation response method according to the first aspect.

According to a third aspect, an operation response apparatus is provided. A structure of the operation response apparatus includes a processor and a memory. The memory is configured to store a program that supports the operation response apparatus in performing the operation response method according to the first aspect, and store data used to implement the operation response method according to the first aspect. The processor is configured to execute the program stored in the memory. The operation response apparatus may further include a communication bus. The communication bus is configured to establish a connection between the processor and the memory.

According to a fourth aspect, a computer-readable storage medium is provided. The computer-readable storage medium stores instructions; and when the instructions are run on a computer, the computer is enabled to perform the operation response method according to the first aspect.

According to a fifth aspect, a computer program product including instructions is provided. When the computer program product runs on a computer, the computer is enabled to perform the operation response method according to the first aspect.

Technical effects achieved in the second aspect, the third aspect, the fourth aspect, and the fifth aspect are similar to the technical effects achieved by corresponding technical means in the first aspect. Details are not described herein again.

### BRIEF DESCRIPTION OF DRAWINGS

FIG. 1 is a schematic diagram of a structure of a terminal device according to an embodiment of this application;
FIG. 2 is a schematic side view of a terminal device according to an embodiment of this application;
FIG. 3 is a schematic diagram of a structure of a pressure-sensitive key according to an embodiment of this application;
FIG. 4 is a schematic diagram of a touch operation on a pressure-sensitive key according to an embodiment of this application;
FIG. 5 is a schematic diagram of controlling a pressure-sensitive key when a mobile phone is held according to an embodiment of this application;
FIG. 6 is a schematic diagram of continuously operating a pressure-sensitive key according to an embodiment of this application;
FIG. 7 is another schematic diagram of continuously operating a pressure-sensitive key according to an embodiment of this application;
FIG. 8A, FIG. 8B, and FIG. 8C are schematic diagrams of dropping down a notification center by using a pressure-sensitive key according to an embodiment of this application;
FIG. 9A and FIG. 9B are schematic diagrams of canceling displaying of a notification center by using a pressure-sensitive key according to an embodiment of this application;
FIG. 10A, FIG. 10B, and FIG. 10C are schematic diagrams of dropping down a control center by using a pressure-sensitive key according to an embodiment of this application;
FIG. 11A and FIG. 11B are schematic diagrams of canceling displaying of a control center by using a pressure-sensitive key according to an embodiment of this application;
FIG. 12 is a schematic diagram of increasing a focal length of a camera by using a pressure-sensitive key according to an embodiment of this application;
FIG. 13 is a schematic diagram of reducing a focal length of a camera by using a pressure-sensitive key according to an embodiment of this application;
FIG. 14 is a schematic diagram of switching to a next short-form video by using a pressure-sensitive key according to an embodiment of this application;
FIG. 15 is a schematic diagram of switching to a previous short-form video by using a pressure-sensitive key according to an embodiment of this application;
FIG. 16 is a schematic diagram of zooming displayed content by using a pressure-sensitive key according to an embodiment of this application;
FIG. 17 is a schematic diagram of a structure of a terminal device according to an embodiment of this application;
FIG. 18 is a block diagram of a software system of a terminal device according to an embodiment of this application;
FIG. 19 is a schematic diagram of logic of a scenario recognition part according to an embodiment of this application;
FIG. 20 is a schematic diagram of logic of a key event processing part according to an embodiment of this application;
FIG. 21 is a schematic diagram of logic of a gesture recognition part according to an embodiment of this application;
FIG. 22 is a schematic diagram of a processing module involved in a gesture recognition procedure and a related operation according to an embodiment of this application;
FIG. 23 is a schematic diagram of logic of a multi-step operation part after completion of a gesture according to an embodiment of this application;
FIG. 24 is a schematic diagram of logic of a mapping parameter update and slide event processing part according to an embodiment of this application;
FIG. 25A, FIG. 25B, FIG. 25C, and FIG. 25D are schematic flowcharts of dropping down and displaying a notification center according to a touch operation on a pressure-sensitive key according to an embodiment of this application; and
FIG. 26A, FIG. 26B, and FIG. 26C are schematic flowcharts of dropping down and displaying a control center according to a touch operation on a pressure-sensitive key according to an embodiment of this application.

### DESCRIPTION OF EMBODIMENTS

To make the objectives, technical solutions, and advantages of this application clearer, implementations of this application are further described in detail below with reference to the accompanying drawings.

In the following description, for description rather than limitation, specific details such as a particular system structure and a particular technology are proposed to facilitate thorough understanding of embodiments of this application. However, persons skilled in the art should understand that this application may also be implemented in another embodiment without these specific details.

It should be understood that, when used in this specification and the appended claims of this application, the term "include" indicates presence of the described feature, entirety, step, operation, element, and/or component, but does not exclude presence or addition of one or more other features, entireties, steps, operations, elements, components, and/or sets thereof.

It should be further understood that in embodiments of this application, "one or more" means one, two, or more than two, and "and/or" describes an association between associated objects and indicates that three relationships may exist. For example, A and/or B may indicate the following cases: Only A exists, both A and B exist, and only B exists, where A and B may be singular or plural. The character "/" in this specification generally indicates an "or" relationship between the associated objects.

In addition, in descriptions of this specification and the appended claims of this application, the terms such as "first", "second", "third", and "fourth" are used only for distinguishing between descriptions, but cannot be understood as indication or implication of relative importance.

Referring to "one embodiment", "some embodiments", or the like that is described in this specification of this application means that specific features, structures, or characteristics described with reference to one or more embodiments of this application are included in the one or more embodiments. Therefore, statements such as "in one embodiment", "in some embodiments", or "in some other embodiments" that appear in different parts of this application do not necessarily refer to same embodiments, but mean "one or more but not all embodiments" unless otherwise specifically emphasized in another manner. The terms "include", "include", "have", and variants thereof all mean "include but are not limited to", unless otherwise specifically emphasized in another manner.

An embodiment of this application provides an operation response method, applied to a terminal device provided with a pressure-sensitive key. The terminal device may also be referred to as a terminal (terminal), user equipment (user equipment, UE), a mobile station (mobile station, MS), a mobile terminal (mobile terminal, MT), and the like. The terminal device may be a mobile phone (mobile phone), a smart television, a wearable device, a tablet computer (Pad), a computer with a wireless transceiver function, a virtual reality (virtual reality, VR) electronic device, an augmented reality (augmented reality, AR) electronic device, a wireless terminal in industrial control (industrial control), a wireless terminal in self-driving (self-driving), a wireless terminal in a remote medical surgery (remote medical surgery), a wireless terminal in smart grid (smart grid), a wireless terminal in transportation safety (transportation safety), a wireless terminal in a smart city (smart city), a wireless terminal in a smart home (smart home), or the like. A specific technology and a specific device form used by the terminal device are not limited in this embodiment of this application.

Next, the pressure-sensitive key is described in detail.

The pressure-sensitive key is a key that can implement an operation through pressure sensing, and may implement a key function by detecting the pressure on the key. For example, the pressure-sensitive key may recognize a press operation by the user by detecting a pressure value on the key, for example, recognize an operation by the user, such as a light-tap, a light-press, or a heavy-press. For another example, the pressure-sensitive key may further recognize a slide operation by the user on the key by detecting pressures at different positions on the key. In addition, the pressure-sensitive key may further provide a touch feedback for the user, to improve interaction experience.

The pressure-sensitive key is triggered by a touch operation, and the pressure on the pressure-sensitive key refers to the pressure on a touch point at which an external object (for example, a stylus or a finger of the user) comes into contact with the pressure-sensitive key. The pressure on the pressure-sensitive key may also be referred to as intensity or contact intensity. It should be understood that an external expression form of the pressure-sensitive key may be a physical key form (for example, a solid key), or may be another form such as a specific surface or input region. This is not limited in this embodiment of this application. It should be further understood that the pressure-sensitive key may also be referred to as another name such as an intensity-sensitive surface (intensity-sensitive surface), an intensity-sensitive input region (intensity-sensitive input regions), an intensity-sensitive key (intensity-sensitive button), an intensity-sensitive solid state key (intensity-sensitive solid state button), a pressure sensing surface, or a pressure sensing input region. The name of the foregoing function key is not specifically limited in this embodiment of this application.

Currently, a key configured on a terminal device is usually a physical key (for example, a volume key and a power key). The physical key refers to a conventional mechanical key. An operation is implemented by pressing a key to connect or disconnect a circuit. A key function is implemented mainly by detecting a fixed down operation and a fixed up operation. Next, differences between the conventional physical key and the pressure-sensitive key in this embodiment of this application are described by using the following Table 1.

**Table 1**

| | Conventional physical key | Pressure-sensitive key |
|---|---|---|
| Principle | An operation is implemented by pressing a key to connect or disconnect a circuit | An operation is implemented through pressure sensing |
| Structure | Movement of a key is supported in need of a mechanical structure | Movement of a key may be supported without a mechanical structure, for example, by adding a pressure sensing sensor to a touch panel |
| Service life | Be prone to wear and damage, and have a limited service life | Be not prone to wear and damage, and have a longer service life |
| Reaction speed | Triggering is performed by pressing a mechanical key, which has a lower triggering speed and lower sensitivity | Triggering is performed by touching, which has a higher triggering speed and higher sensitivity |
| Waterproofing performance | A water inlet gap exists around a key, which is not waterproof | It may be integrally formed with an appearance of a device, so that there is no water inlet gap around a key, and the waterproofing performance is better |

It can be known according to a comparison analysis of the foregoing Table 1 that, compared with the conventional physical key, the pressure-sensitive key has advantages such as a longer service life, a higher reaction speed, higher sensitivity, and better waterproofing performance. In addition, a surface of the pressure-sensitive key may be integrally formed with an appearance of a device. In this way, key control may be implemented without damaging unity of the appearance of the device, for example, a control manner similar to a physical key is implemented.

In an embodiment, for the terminal device, a pressure-sensitive key may be disposed on one or more sides of the device, or a pressure-sensitive key may be disposed on another position such as a display screen or a rear housing of the device. A position at which the pressure-sensitive key is disposed is not limited in this embodiment of this application.

Next, an example in which the terminal device is a mobile phone is used to describe a terminal device that is provided with a pressure-sensitive key on a side of the device.

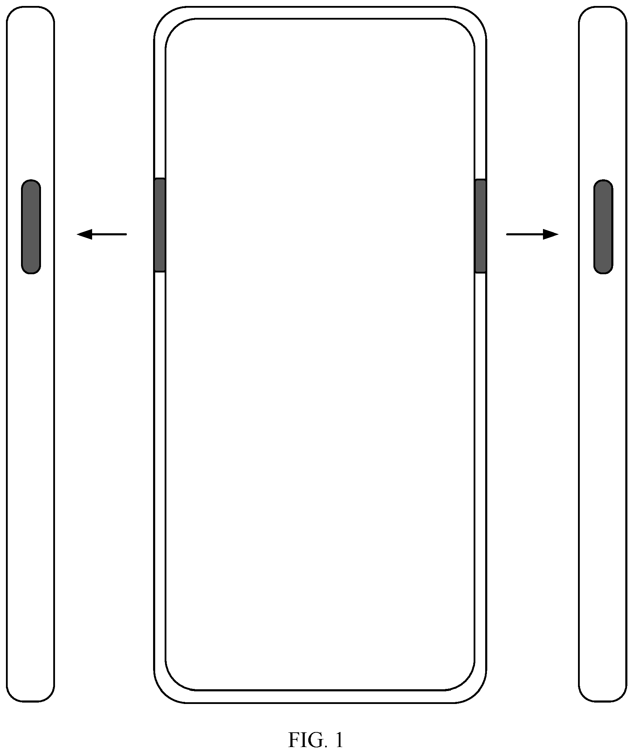

Referring to FIG. 1, FIG. 1 is a schematic diagram of a structure of a terminal device according to an embodiment of this application. As shown in FIG. 1, using an example in which the terminal device is a mobile phone, a long-strip-shaped pressure-sensitive key is disposed on each of left and right sides of the mobile phone.

It should be understood that the manner for disposing a pressure-sensitive key in FIG. 1 is merely a schematic description, and does not constitute a limitation to the manner for disposing a pressure-sensitive key. For example, the mobile phone may be further provided with a pressure-sensitive key on only one side (for example, a left side or a right side), or the mobile phone may further include a plurality of (for example, two) pressure-sensitive keys disposed on one side, and the shape of the pressure-sensitive key may be set to another shape. None of positions, a quantity, shapes, and a distribution manner of pressure-sensitive keys is limited in this embodiment of this application.

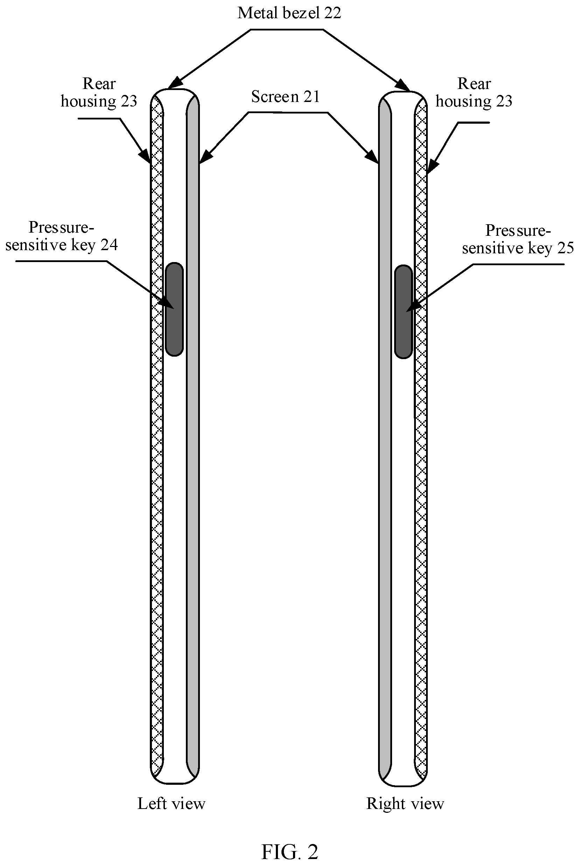

Referring to FIG. 2, FIG. 2 is a schematic side view of a terminal device according to an embodiment of this application. As shown in FIG. 2, using an example in which the terminal device is a mobile phone, an external structure of the mobile phone includes a display screen 21, a metal bezel 22, and a rear housing 23. The metal bezel 22 is located between the display screen 21 and the rear housing 23, surrounds a periphery (upper, lower, left, and right sides) of the mobile phone, and is configured to protect an internal structure between the display screen 21 and the rear housing 23. A pressure-sensitive key is disposed on each of a left side and a right side of the metal bezel 22. As shown in a left view of FIG. 2, a pressure-sensitive key 24 (that is, a left pressure-sensitive key) is disposed on the left side of the metal bezel 22. As shown in a right view of FIG. 2, a pressure-sensitive key 25 (that is, a right pressure-sensitive key) is disposed on the right side of the metal bezel 22.

As an example, a key surface of the pressure-sensitive key may be integrally formed with the metal bezel. For example, a partial region of the metal bezel is formed as the key surface of the pressure-sensitive key. For example, a partial region (for example, an upper region) of the left side of the metal bezel 22 is formed as a key surface of the pressure-sensitive key 24, and a partial region (for example, an upper region) of the right side of the metal bezel 22 is formed as a key surface of the pressure-sensitive key 25. In this way, damage to the integrity of the appearance of the metal bezel can be avoided, which not only can improve the aesthetics of the device, but also can improve the waterproof performance and the service life of the pressure-sensitive key.

It should be understood that the pressure-sensitive key and the metal bezel on which the pressure-sensitive key is located may alternatively be separately disposed. For example, the pressure-sensitive key is embedded in the metal bezel, and a specific implementation may be set according to an actual requirement.

It should be further understood that in FIG. 2, only an example in which the pressure-sensitive key is disposed on the metal bezel 22 between the display screen 21 and the rear housing 23 is used. In another implementation, the pressure-sensitive key may alternatively be disposed on another external component such as the display screen 21 or the rear housing 23. For example, when the display screen 21 is a curved screen, and the curved screen can extend to cover most regions of a side of the mobile phone, a pressure-sensitive key may be further disposed on a side (extending to cover some regions of the side of the mobile phone) of the curved screen 10. Similarly, a pressure-sensitive key may also be disposed on a side edge (extending to cover some regions of the side of the mobile phone) of the rear housing 23. A load-bearing component of the pressure-sensitive key is not limited in this embodiment of this application.

Next, a structure of the pressure-sensitive key is described.

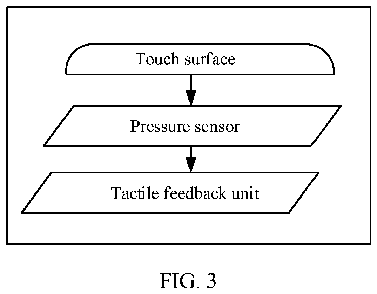

Referring to FIG. 3, FIG. 3 is a schematic diagram of a structure of a pressure-sensitive key according to an embodiment of this application.

As shown in FIG. 3, the pressure-sensitive key may include a touch surface and a pressure sensor. The touch surface is a key surface on the pressure-sensitive key that may be provided for a user to perform a touch operation. The pressure sensor is configured to sense the pressure on the touch surface, and generate a corresponding output signal. For example, the pressure sensor may output the generated output signal to a processor of the terminal device. The pressure sensor may be located below or inside the touch surface. There may be one pressure sensor or one group of pressure sensors. The pressure sensor may be a pressure sensor of a type such as a capacitive sensor, a resistive sensor, a voltage pressure sensor, an electromagnetic pressure sensor, or a vibrating string pressure sensor. The type of the pressure sensor is not limited in this embodiment of this application.

In an embodiment, the pressure-sensitive key may further include a tactile feedback unit. The tactile feedback unit is configured to generate a tactile feedback in a region of the pressure-sensitive key in a manner such as vibration. For example, the tactile feedback unit may include a vibrator (for example, a surface oscillator) that can generate vibration, to generate a vibrational feedback in a region of the pressure-sensitive key.

As an example, the tactile feedback unit may provide a plurality of tactile feedback modes. Different tactile feedback modes correspond to different touch manners on the pressure-sensitive key, and are used to generate tactile feedbacks of different modes for the different touch manners. For example, the plurality of tactile feedback modes include different vibrational feedback modes. The different vibrational feedback modes correspond to different touch manners on the pressure-sensitive key, and are used to generate vibrational feedbacks of different modes for the different touch manners. In a possible implementation, different vibrational feedback modes may be set according to one or more of vibration amplitude, vibration duration, and the number of vibration times. That is, different vibrational feedback modes are different in one or more aspects of vibration amplitude, vibration duration, and the number of vibration times.

In an embodiment, touch operations on the pressure-sensitive key may include basic operations such as a press operation and a slide operation. Certainly, with the progress of technologies, other types of touch operations may also be included, which is not limited in this embodiment of this application.

Next, the press operation and the slide operation are separately described in detail.

### Press operation

The press operation is an operation of pressing on a pressure-sensitive key.

As an example, different pressure levels may be set according to the magnitude of the pressure on the surface of the key, so that press operations on a pressure-sensitive key are divided into press operations of different pressure levels. For example, according to press pressures, press operations may include operations such as a light-tap, a light-press, and a heavy-press.

In a possible implementation, three pressure levels may be set. For example, a press operation whose press pressure is greater than or equal to a first pressure threshold and less than a second pressure threshold is set as a first-level press operation; a press operation whose press pressure is greater than or equal to the second pressure threshold and less than a third pressure threshold is set as a second-level press operation; and a press operation whose press pressure is greater than or equal to the third pressure threshold is set as a third-level press operation. The first pressure threshold is greater than or equal to 0. The second pressure threshold is greater than the first pressure threshold, and the third pressure threshold is greater than the second pressure threshold.

In a possible implementation, the first-level press operation, the second-level press operation, and the third-level press operation may be respectively referred to as a light-tap operation, a light-press (also referred to as light-touch) operation, and a heavy-press operation.

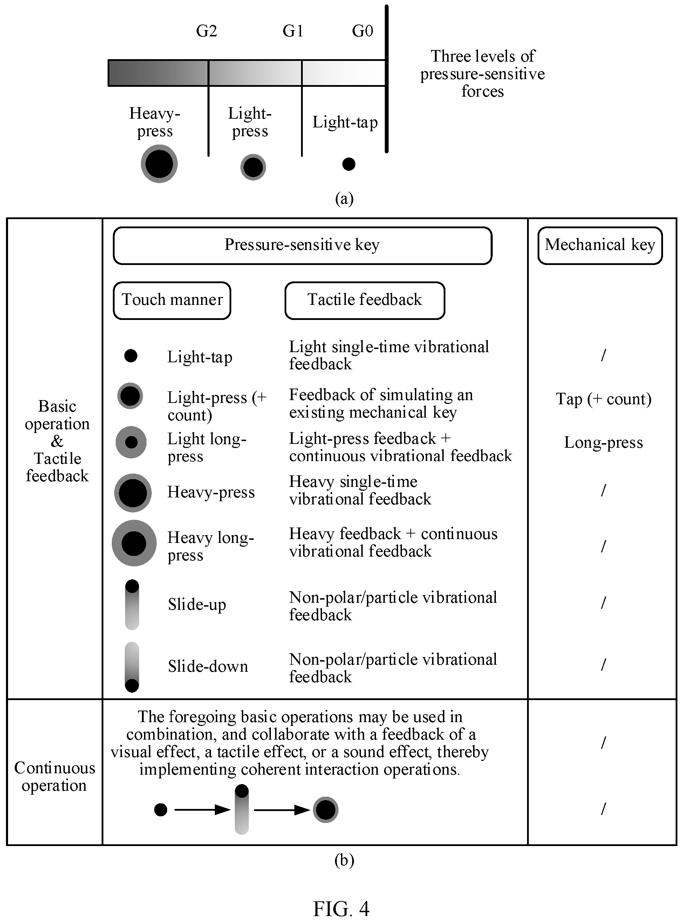

Referring to FIG. 4, FIG. 4 is a schematic diagram of a touch operation on a pressure-sensitive key according to an embodiment of this application. As shown in (a) of FIG. 4, the pressure-sensitive key may recognize three levels of pressure-sensitive forces, and G0, G1, and G2 are three pressure thresholds whose pressure values successively increase. A press operation with a press pressure in [G0, G1) is recognized as a light-tap operation, a press operation with a press pressure in [G1, G2) is recognized as a light-press operation, and a press operation with a press pressure in [G2, ∞) is recognized as a heavy-press operation.

In an embodiment, a press operation on the pressure-sensitive key may be further classified according to press duration of the press operation. For example, press operations may be classified into a short-press and a long-press according to press duration. A short-press operation is a press operation of immediately lifting after pressing, and a long-press operation is a press operation whose press duration is greater than a first duration threshold.

In an embodiment, for press operations on the pressure-sensitive key, the press operations may be further classified with reference to magnitude and duration of press pressures. For example, the press operations are classified into a light-tap, a light short-press, a light long-press, a heavy short-press, and a heavy long-press.

### Slide operation

The slide operation is an operation of sliding on a pressure-sensitive key.

In an embodiment, the slide operation on the pressure-sensitive key may include a slide operation along a length direction of the pressure-sensitive key, a slide operation along a width direction of the pressure-sensitive key, or the like. It should be understood that a slide operation along another direction may also be included, which is not limited in this embodiment of this application.

For example, as shown in (b) of FIG. 4, slide operations on the pressure-sensitive key include a slide-up operation and a slide-down operation. In addition, the slide operations may further include a slide operation along another direction, for example, a slide operation along a direction perpendicular to the display screen, such as a slide operation of sliding forward or sliding backward. This is not limited in this embodiment of this application.

In an embodiment, the foregoing basic operations (a single press operation or slide operation) on the pressure-sensitive key may be further used in combination, and collaborate with a feedback such as a visual effect, a tactile effect, or a sound effect, thereby implementing coherent interaction operations. That is, the touch operation on the pressure-sensitive key may further include a continuous operation formed by combining two or more basic operations. For example, as shown in (b) of FIG. 4, the continuous operation includes: a light-tap + a slide-up + a light-press.

As an example, as shown in (b) of FIG. 4, a plurality of tactile feedback modes of the pressure-sensitive key include a light single-time vibrational feedback, a feedback of simulating an existing mechanical key, a light-press feedback + a continuous vibrational feedback, a heavy single-time vibrational feedback, a heavy feedback + a continuous vibrational feedback, and a non-polar/particle vibrational feedback. Different tactile feedback modes correspond to different touch manners. For example, for a light-tap operation on the pressure-sensitive key, the light-tap single-time vibrational feedback is used; for a light-press operation on the pressure-sensitive key, the feedback of simulating an existing mechanical key is used; for a light long-press operation on the pressure-sensitive key, the light-press feedback + the continuous vibrational feedback are used; for a heavy-press operation on the pressure-sensitive key, the heavy single-time vibrational feedback is used; for a heavy long-press operation on the pressure-sensitive key, the heavy feedback + the continuous vibrational feedback are used; and for a slide operation (for example, a slide-up operation or a slide-down operation) on the pressure-sensitive key, the non-polar/particle vibrational feedback is used.

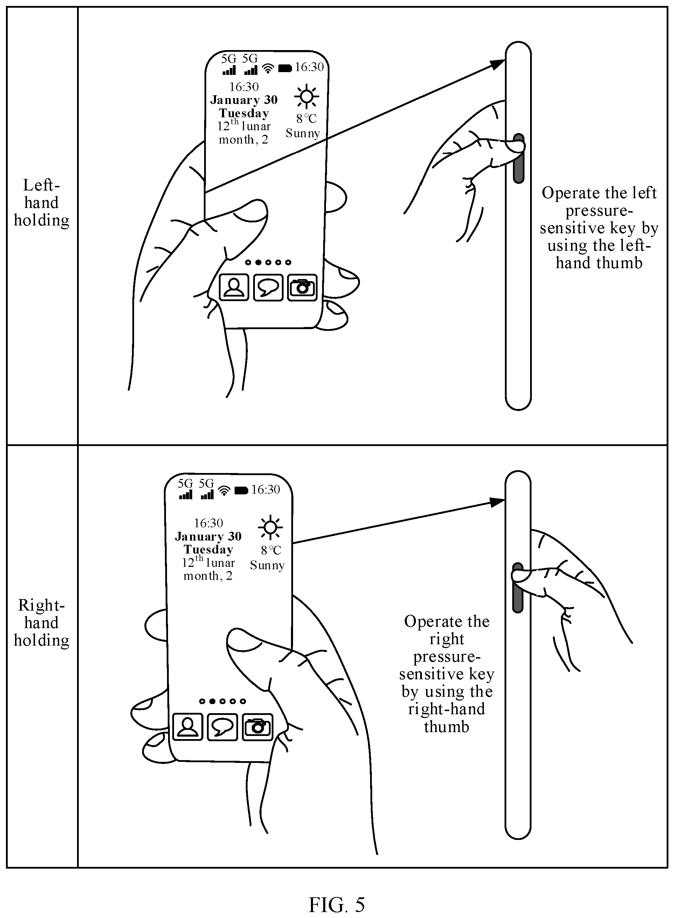

With reference to the mobile phone shown in FIG. 1, referring to FIG. 5, FIG. 5 is a schematic diagram of controlling a pressure-sensitive key when a mobile phone is held according to an embodiment of this application. When left and right bezels of the mobile phone are each provided with a pressure-sensitive key, the user may use the mobile phone in a left-hand holding manner, or may use the mobile phone in a right-hand holding manner. When the mobile phone is used in the left-hand holding manner, the user may conveniently operate the left pressure-sensitive key by using the left-hand thumb, for example, touch or press the left pressure-sensitive key by using the left-hand thumb, or slide (for example, slide up or slide down) on the left pressure-sensitive key. When the mobile phone is used in the right-hand holding manner, the user may conveniently operate the right pressure-sensitive key by using the right-hand thumb, for example, touch or press the right pressure-sensitive key by using the right-hand thumb, or slide (for example, slide up or slide down) on the right pressure-sensitive key.

It should be understood that besides the thumb, the user may operate the left or right pressure-sensitive key by using another position of the hand (for example, the palm, a palm side, or a finger other than the thumb), or may operate the right pressure-sensitive key by using the left hand or operate the left pressure-sensitive key by using the right hand. A manner in which the user operates the pressure-sensitive key is not limited in this embodiment of this application. For example, when the mobile phone is held with the left hand, the user may operate the right pressure-sensitive key by using a finger close to the right pressure-sensitive key, such as an index finger or a middle finger of the left hand. Similarly, when the mobile phone is held with the right hand, the user may operate the left pressure-sensitive key by using a finger close to the left pressure-sensitive key, such as an index finger or a middle finger of the right hand.

In this embodiment of this application, a human computer interaction manner based on a pressure-sensitive key is provided. The terminal device may perform a visual feedback or a visual feedback and a tactile feedback for a touch operation by the user on the pressure-sensitive key. In this way, the user may control a user interface of the terminal device by touching a pressure-sensitive key on the terminal device, to implement interaction with the user interface. The user interface may be a system interface such as a desktop, or may be an application interface of an application such as a system application or a third-party application.

In an embodiment, for different touch operations on a pressure-sensitive key, the terminal device may perform different feedbacks, that is, different touch operations on the pressure-sensitive key may implement different functions. In addition, in different scenarios, for a same touch operation on a pressure-sensitive key, the terminal device may also perform different visual feedbacks, that is, a same touch operation on a pressure-sensitive key may be used for implementing different functions in different scenarios.

In an embodiment, functions that can be implemented by the touch operation on the pressure-sensitive key include, but are not limited to, one or more of the following functions: drop-down of a notification center and/or a control center, audio/video switching, progress bar adjustment, focal length adjustment, image or page zooming, page flip, volume adjustment, cursor movement, quick start of a related service or task, and the like. A function that can be implemented by a touch operation on a pressure-sensitive key is not limited in this embodiment of this application.

As an example, the quick start of a related service or task includes, but is not limited to, at least one of the following: a service page of an intelligent service (for example, starting a yoyo service) is quickly opened, recording is quickly started, payment code is quickly called out, and the like.

In an embodiment, a function of drop-down of a notification center and/or a control center may be implemented in a scenario such as a desktop; a function of audio/video switching or progress bar adjustment is implemented in an audio/video playback scenario (for example, a short-form video playback scenario), for example, in a short-form video playback scenario, a short-form video switching function is implemented, and in a long-form video playback scenario, the function of progress bar adjustment is implemented; the function of focal length adjustment is implemented in a camera scenario such as photographing or video recording; the function of zooming is implemented in a content browsing scenario such as image browsing, map browsing, or page browsing; the function of volume adjustment is implemented in a scenario such as a call, voice playback, or audio/video playback; the function of page flip is implemented in a reading scenario; the function of cursor movement is implemented in an information recording scenario such as notes; and in a scenario in which a particular application is run, the function of quick start of a particular service of the particular application is implemented.

It should be understood that in this embodiment of this application, the foregoing scenarios and functions are merely used as examples for exemplary description, and the foregoing examples do not constitute a limitation to functions implemented by a touch operation on a pressure-sensitive key in different scenarios.

In an embodiment, functions corresponding to different touch operations may be set by the terminal device by default, or may be set by the user. This is not limited in this embodiment of this application.

In an embodiment, the terminal device may provide a function setting entry of a pressure-sensitive key for the user. By using the function setting entry, the user may set corresponding functions for different touch operations respectively, or set functions in different scenarios for a same touch operation.

In an example, the terminal device may display a first setting interface of a pressure-sensitive key according to an operation by the user. The first setting interface includes a plurality of touch operation options. For example, the plurality of touch operation options may include one or more of basic operation options such as a light-tap option, a light-press option, a light long-press option, a heavy-press option, a heavy long-press option, a slide-up option, and a slide-down option, and certainly, may further include a continuous operation option corresponding to a continuous operation formed by combining any two or more basic operations. The user may tap any touch operation option, and in response to a tap operation by the user, an optional function list is displayed, where the optional function list includes one or more functions. The user may select at least one function from the optional function list, and in response to a selection operation by the user, an association between the touch operation and the at least one function selected by the user may be established. Then, if the touch operation on the pressure-sensitive key is detected, a corresponding function may be implemented.

The basic operation refers to a single press operation (for example, a light-tap, a light-press, a light long-press, a heavy-press, or a heavy long-press) or slide operation (for example, slide-up operation or slide-down operation). The continuous operation is an operation formed by combining two or more basic operations.

In an embodiment, the continuous operation may be set by the terminal device by default, or may be user-defined. This is not limited in this embodiment of this application. For example, the terminal device may further provide a user-defined setting entry of the continuous operation for the user. By using the setting entry, the user may combine any two or more of the foregoing basic operations into a user-defined continuous operation, and may set a corresponding function for the user-defined continuous operation. For example, the terminal device may display a second setting interface according to an operation by the user. The second setting interface includes a plurality of basic operation options. The user may select at least two basic operation options from the plurality of basic operation options, and in response to a selection operation by the user, the terminal device may combine the basic operation options selected by the user into one user-defined continuous operation. In addition, the user may further specify an execution sequence corresponding to the selected basic operation options, and then the terminal device may combine basic operations corresponding to the basic operation options selected by the user into one user-defined continuous operation in the execution sequence specified by the user.

A continuous operation provided in this embodiment of this application is illustrated below.

First continuous operation: light-press + slide-down.

The light-press refers to a press operation whose press pressure is greater than or equal to the second pressure threshold and less than the second pressure threshold.

That is, the user may first lightly press a pressure-sensitive key, and then slide down on the pressure-sensitive key.

Second continuous operation: light long-press + slide-down.

The light long-press refers to a light-press operation whose light-press duration is greater than or equal to the first duration threshold, that is, a press operation whose press pressure is greater than or equal to the second pressure threshold and less than the third pressure threshold and whose press duration is greater than or equal to the second duration threshold. The second pressure threshold, the third pressure threshold, and the first duration threshold may each be preset according to an actual requirement. For example, the first duration threshold may be 200 ms, 300 ms, or 400 ms.

As an example, the second continuous operation may include the following two implementations:
1) After a light-press reaches the first duration threshold, slide down without lifting a hand.

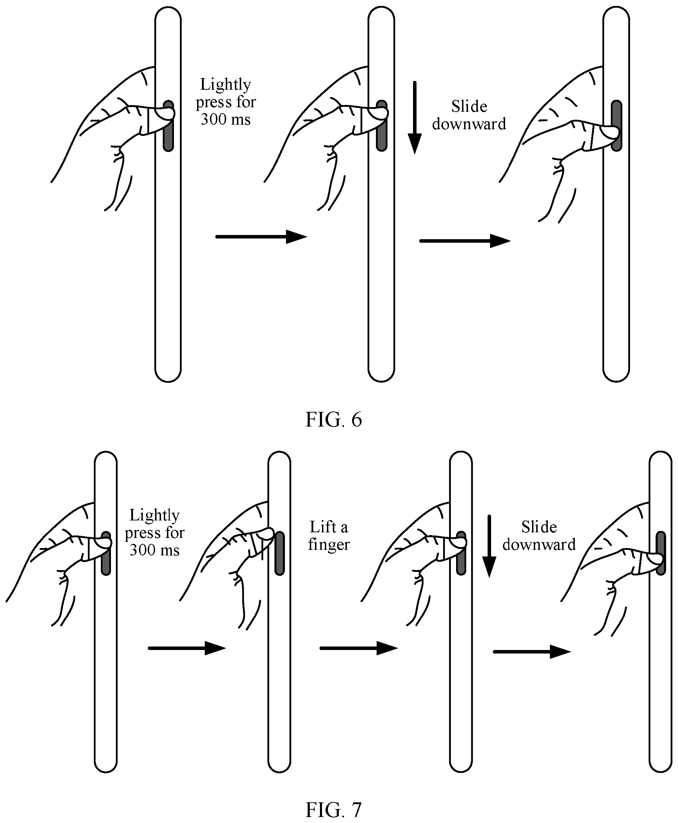

For example, as shown in FIG. 6, using an example in which the first duration threshold is 300 ms, the user may first lightly press the pressure-sensitive key with a thumb, and after the light-press duration is greater than or equal to 300 ms, slide down from a pressing point without lifting the thumb.

2) After a light-press reaches the first duration threshold, first lift the finger, and then use the finger to slide down on the pressure-sensitive key.

For example, as shown in FIG. 7, using an example in which the first duration threshold is 300 ms, the user may first lightly press the pressure-sensitive key with a thumb, and after the light-press duration is greater than or equal to 300 ms, first lift the thumb, and then touch the pressure-sensitive key with the thumb and slide down.

It should be understood that in this embodiment of this application, the foregoing continuous operation is merely used as an example for schematic description, and the foregoing continuous operation does not constitute a limitation to continuous operations. In another embodiment, the continuous operation may further include another form of continuous operation, for example, a continuous operation of lightly pressing for a plurality of times (for example, twice or three times).

This is not limited in this embodiment of this application.

Next, with reference to the accompanying drawings, a scenario in which a terminal device is controlled by using a touch operation on a pressure-sensitive key is described by using an example.

Scenario 1: The notification center and/or the control center is dropped down by using a slide operation.

In an embodiment, the user may drop down the notification center and/or the control center by performing a slide operation on the pressure-sensitive key. In an example, when displaying the first interface, the terminal device may drop down and display the notification center and/or the control center in response to a slide operation on the pressure-sensitive key. The first interface may be a particular interface such as a desktop. The slide operation may be a slide operation along a preset direction, for example, a slide-down operation.

Currently, the user usually drops down the notification center or the control center by sliding down at the top of a screen. However, such a drop-down operation usually needs to be performed by a user in two hands. For example, the user holds the terminal device in one hand, and a finger of the other hand performs a slide-down operation on a screen of the terminal device. Therefore, this operation manner of dropping down the notification center or the control center has some limitations, and cannot call out the notification center or the control center when the user cannot operate with two hands, which is not highly flexible.

In this embodiment of this application, when the first interface is displayed, the notification center and/or the control center is dropped down and displayed in response to a slide operation on the pressure-sensitive key, so that the user may drop down the notification center and/or the control center by sliding a pressure-sensitive key, thereby expanding manners of dropping down the notification center and/or the control center, and providing diversified drop-down notification manners for the user. In addition, compared with a drop-down notification manner in which a finger of a user slides down from the top of a screen, an operation manner of dropping down the notification center and/or the control center by using a pressure-sensitive key is smoother and more convenient. For example, the operation manner may be implemented by using a single hand. Therefore, user operations can be facilitated, and user experience can be improved.

In an embodiment, to avoid a misoperation by the user, the user may further drop down the notification center and/or the control center by using a second continuous operation (a short-press and a slide-down) on the pressure-sensitive key. In an example, when displaying the first interface, the terminal device may drop down and display the notification center and/or the control center in response to the first continuous operation on the pressure-sensitive key.

Next, with reference to FIG. 1, by using an example in which a pressure-sensitive key is disposed on each of a left side and a right side of a mobile phone, implementations of dropping down the notification center and dropping down the control center through short-press + slide-down operations are separately described.

The notification center is an entry for managing push information from an application in the terminal device or displaying resident status information, and may be used for displaying a notification message, for example, one or more notification message cards. The control center is an entry for controlling a device state of the terminal device, and may include shortcut switches of a plurality of functions, for example, shortcut switches of functions such as brightness, volume, Bluetooth, and Wi-Fi, which may help a user to perform quick settings.
1) Drop-down the notification center by performing a short-press + a slide-down on a left pressure-sensitive key of a mobile phone.

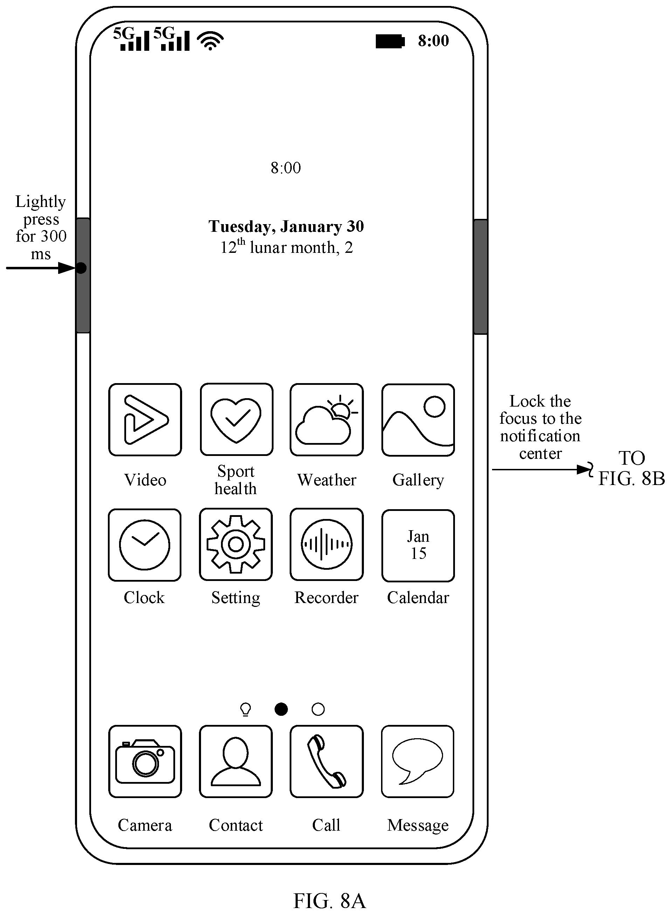

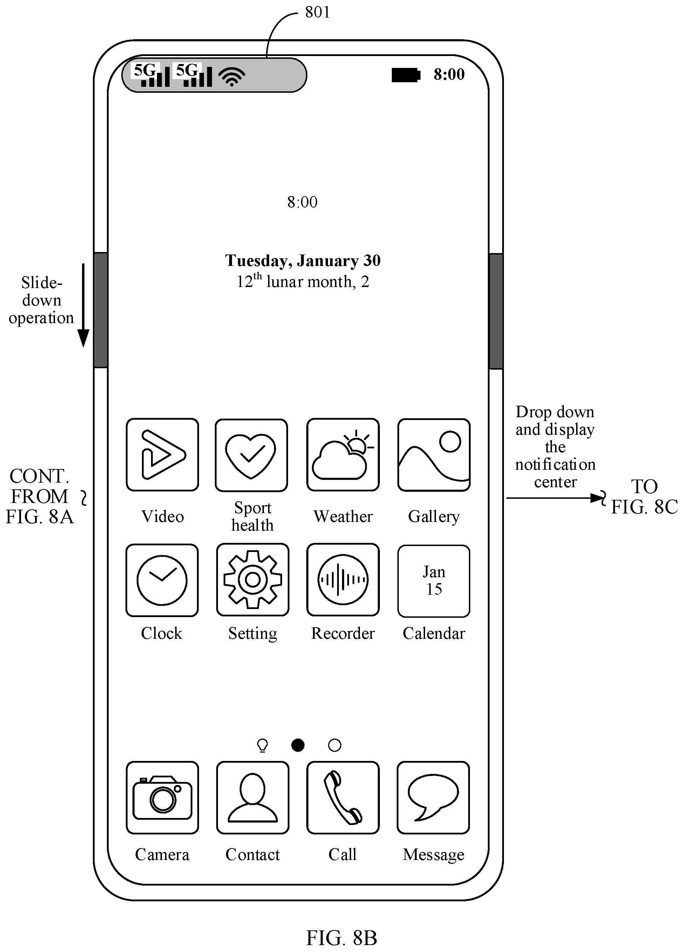

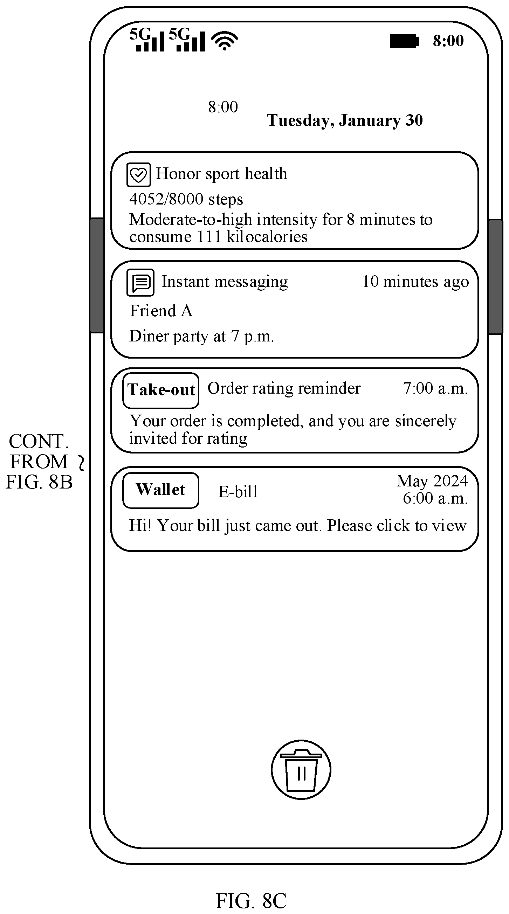

Referring to FIG. 8A, FIG. 8B, and FIG. 8C, FIG. 8A, FIG. 8B, and FIG. 8C are schematic diagrams of dropping down a notification center by using a pressure-sensitive key according to an embodiment of this application. As shown in FIG. 8A, the mobile phone displays a desktop, and the desktop includes applications such as camera, contact, phone, and message. When the mobile phone displays the desktop, the user lightly presses a left pressure-sensitive key of the mobile phone for 300 ms. In response to an operation that the user lightly presses the left pressure-sensitive key for 300 ms, as shown in FIG. 8B, the mobile phone displays a dynamic focus effect 81 in a left region of a top status bar. It should be understood that, the dynamic focus effect may be a highlighting dynamic effect, or may be another dynamic effect. This is not limited in this embodiment of this application. The dynamic focus effect may indicate that the current focus is locked to the notification center, and then indicate that the notification center can be dropped down if the user continues to perform a slide-down operation on the pressure-sensitive key. As shown in FIG. 8B, after the operation that the user lightly presses the left pressure-sensitive key for 300 ms, the user may continue to perform a slide-down operation on the left pressure-sensitive key. In response to the slide-down operation by the user, the mobile phone may display the notification center from the top, as shown in FIG. 8C.

In addition, after the notification center is dropped down and displayed, the user may further collapse the notification center by performing a touch operation on the pressure-sensitive key. The touch operation may be preset, or may be user-defined. For example, the touch operation may be slide-up, or a light-press + slide-up.

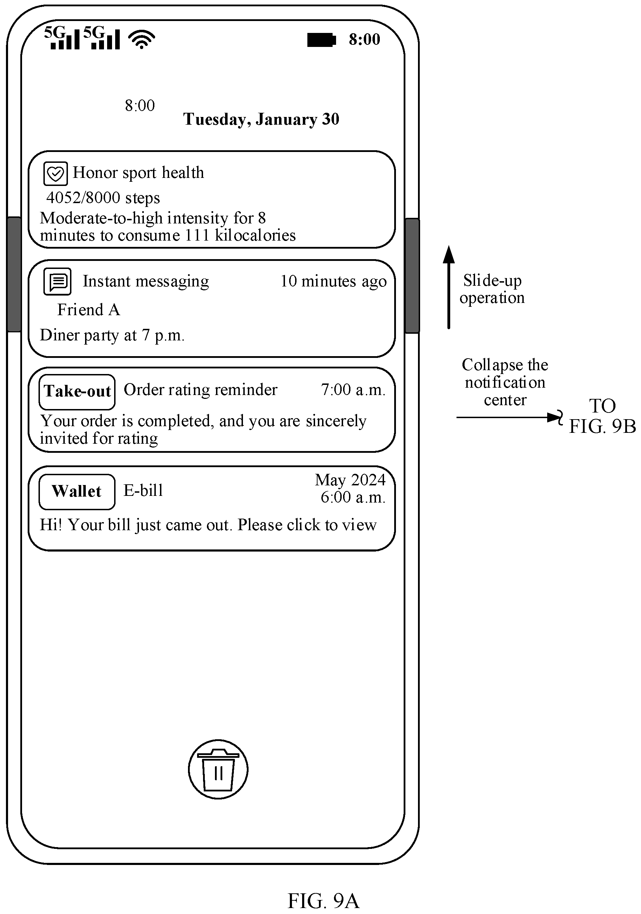

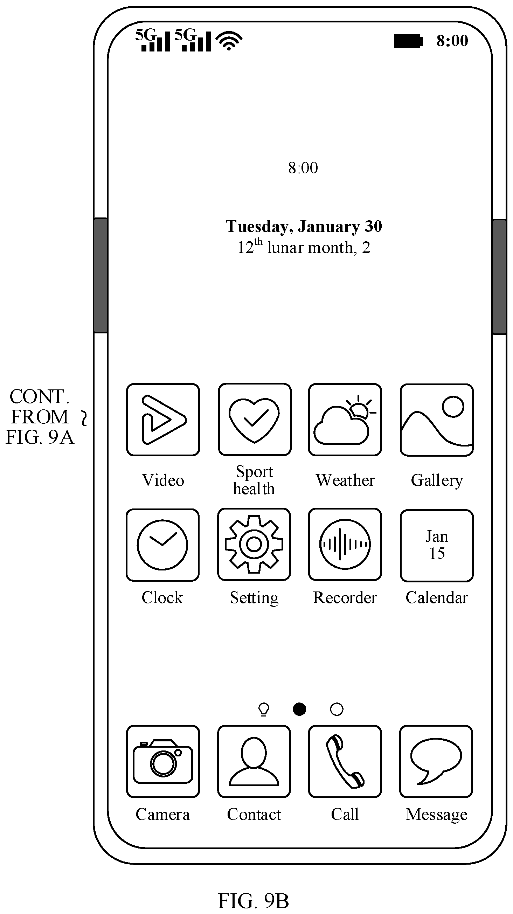

Referring to FIG. 9A and FIG. 9B, FIG. 9A and FIG. 9B are schematic diagrams of canceling displaying of a notification center by using a pressure-sensitive key according to an embodiment of this application. As shown in FIG. 9A, when the mobile phone displays the notification center, the user may perform a slide-up operation on the left pressure-sensitive key of the mobile phone, and in response to the slide-up operation by the user, the mobile phone may cancel displaying of the displayed notification center, as shown in FIG. 9B.

It should be understood that in this embodiment of this application, the notification center may alternatively be dropped down (or collapsed) by using another touch operation on the pressure-sensitive key. In addition, the notification center may also be dropped down (or collapsed) by using the right pressure-sensitive key. A specific implementation may be set, for example, user-defined, according to an actual requirement, and is not limited in this embodiment of this application.

2) Drop-down the control center by performing a first continuous operation on a right pressure-sensitive key of a mobile phone.

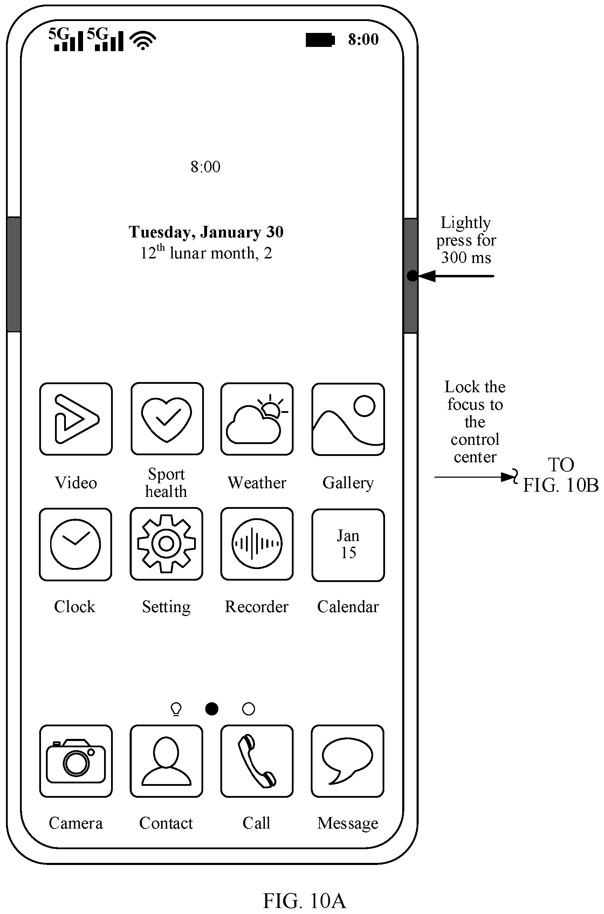

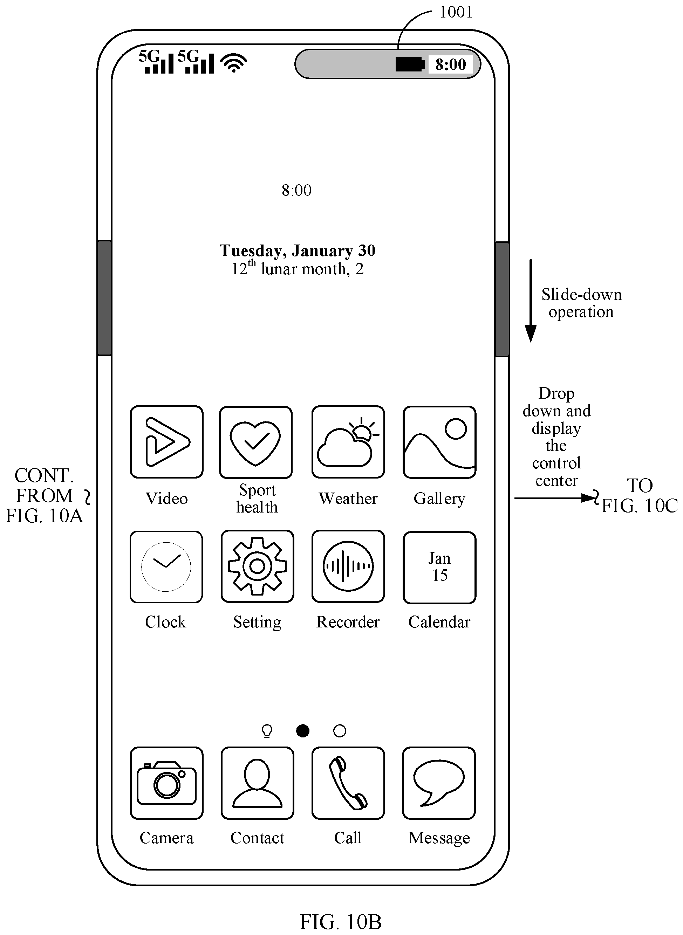

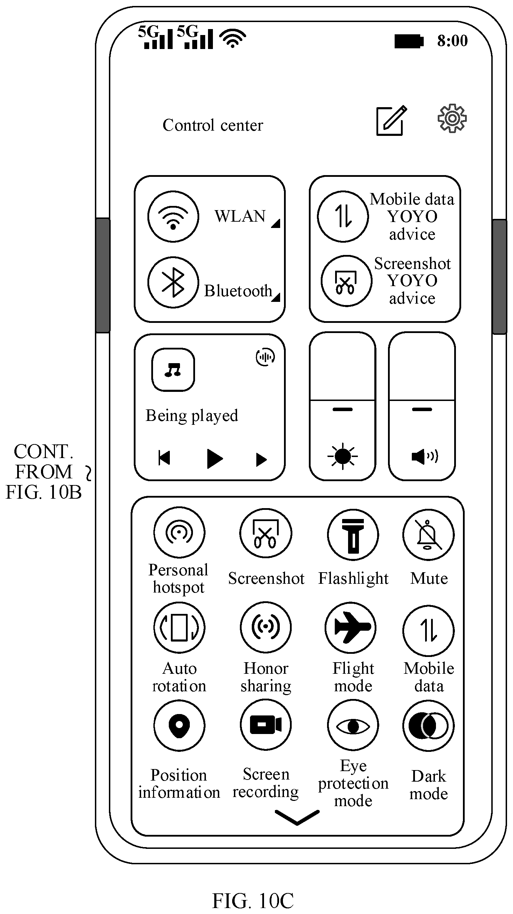

Referring to FIG. 10A, FIG. 10B, and FIG. 10C, FIG. 10A, FIG. 10B, and FIG. 10C are schematic diagrams of dropping down a control center by using a pressure-sensitive key according to an embodiment of this application. As shown in FIG. 10A, the mobile phone displays a desktop, and the desktop includes applications such as camera, contact, phone, and message. When the mobile phone displays the desktop, the user lightly presses a right pressure-sensitive key of the mobile phone for 300 ms. In response to an operation that the user lightly presses the right pressure-sensitive key for 300 ms, as shown in FIG. 10B, the mobile phone displays a dynamic focus effect 1001 in a right region of a top status bar. It should be understood that, the dynamic focus effect may be a highlighting dynamic effect, or may be another dynamic effect. This is not limited in this embodiment of this application. The dynamic focus effect may indicate that the focus is locked to the control center, and then indicate that the control center can be dropped down if the user continues to perform a slide-down operation on the pressure-sensitive key. As shown in FIG. 10B, after the operation that the user lightly presses the right pressure-sensitive key for 300 ms, the user may continue to perform a slide-down operation on the right pressure-sensitive key. In response to the slide-down operation by the user, as shown in FIG. 10C, the mobile phone may display a control center from the top. The control center may include shortcut keys for functions such as Bluetooth, Wi-Fi, mobile data, screenshot, brightness, volume, personal hotspot, and flashlight.

In addition, after the control center is dropped down and displayed, the user may further collapse the control center by performing a touch operation on the pressure-sensitive key. The touch operation may be preset, or may be user-defined. For example, the touch operation may be slide-up, or a light-press + slide-up.

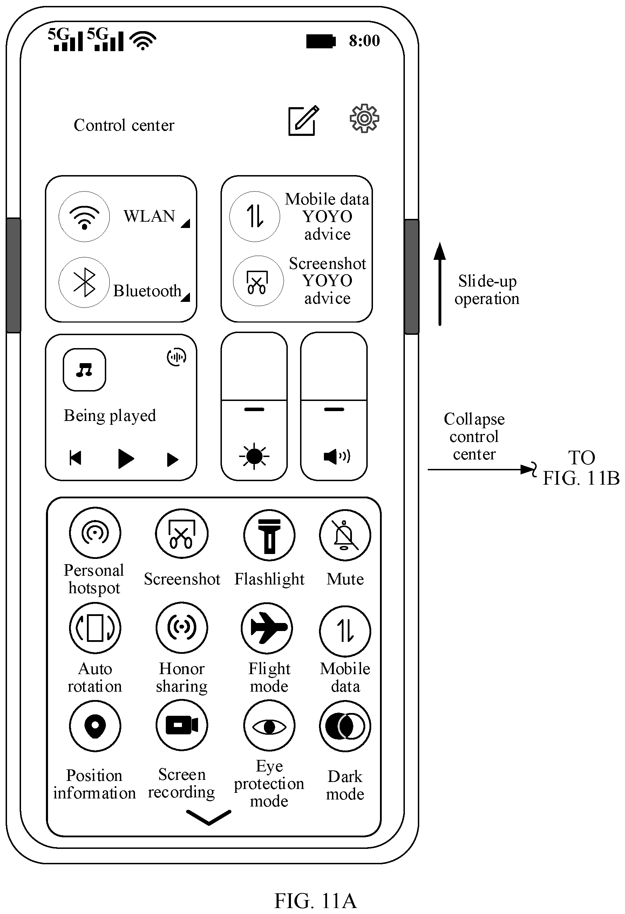

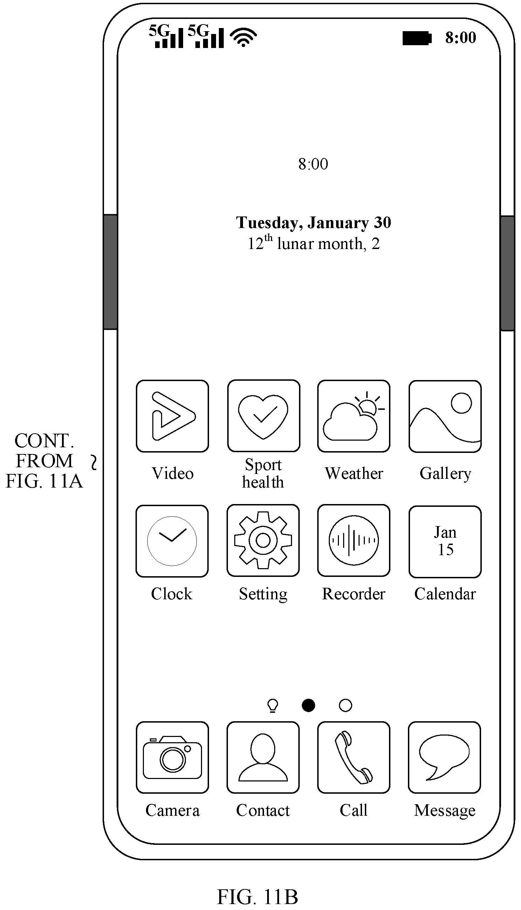

Referring to FIG. 11A and FIG. 11B, FIG. 11A and FIG. 11B are schematic diagrams of canceling displaying of a control center by using a pressure-sensitive key according to an embodiment of this application. As shown in FIG. 11A, when the mobile phone displays the control center, the user may perform a slide-up operation on the right pressure-sensitive key of the mobile phone, and in response to the slide-up operation by the user, the mobile phone may cancel displaying of the displayed control center, as shown in FIG. 11B.

It should be understood that in this embodiment of this application, the control center may alternatively be dropped down (or collapsed) by using another touch operation (for example, sliding up or sliding down) on the pressure-sensitive key. In addition, the control center may be dropped down (or collapsed) by using a left pressure-sensitive key or a pressure-sensitive key configured at another position. A specific implementation may be set, for example, user-defined, according to an actual requirement, and is not limited in this embodiment of this application.

It should be further understood that in FIG. 8A, FIG. 8B, and FIG. 8C to FIG. 11A and FIG. 11B, descriptions are provided only by using an example in which the notification center and the control center are separated, and the notification center and the control center are separately dropped down by using pressure-sensitive keys. However, in another embodiment, the notification center and the control center may be further combined. For ease of description, a combined form of the notification center and the control center is referred to as the notification control center. That is, the notification control center includes the notification center and the control center. In this case, the user may further drop down the notification control center by using a pressure-sensitive key. For example, the user may drop down the notification control center by performing the first continuous operation or the slide-down operation on the left pressure-sensitive key or the right pressure-sensitive key. In addition, when the mobile phone displays the notification control center, the user may further collapse the notification control center by performing a touch operation such as a slide-up operation on the left pressure-sensitive key or the right pressure-sensitive key.

Scenario 2: A focal length of the camera is adjusted through a slide operation.

In an embodiment, the user may adjust the focal length of the camera by performing a slide operation on the pressure-sensitive key.

In an example, when the terminal device displays a camera application interface, in response to a slide operation (a slide-up operation or a slide-down operation) on the pressure-sensitive key, the focal length of the camera may be adjusted. For example, the focal length of the camera is increased in response to a slide-up operation on the pressure-sensitive key; and the focal length of the camera is reduced in response to a slide-down operation on the pressure-sensitive key. For example, the camera application interface may be a shooting interface such as a photographing interface or a video recording interface.

As an example, in a process of adjusting a focal length of the camera according to a slide operation on a pressure-sensitive key, the focal length of the camera may be further gradually adjusted according to a slide distance of the slide operation. The adjustment step may be set according to an actual requirement. For example, as the slide distance of the slide-up operation increases, the focal length of the camera gradually increases; and as the slide distance of the slide-down operation increases, the focal length of the camera gradually decreases.
1) Increase the focal length of the camera by performing a slide-up operation on the right pressure-sensitive key of the mobile phone.

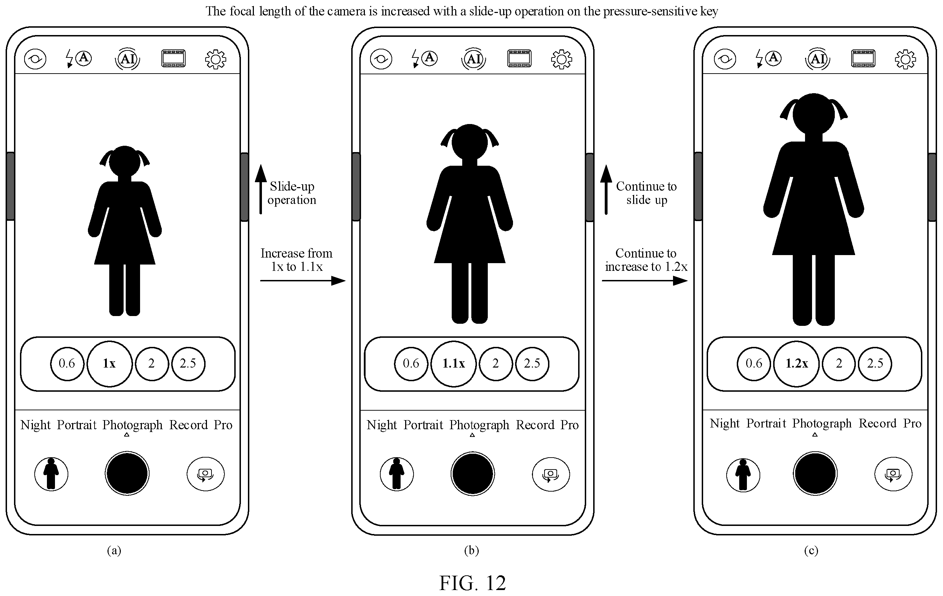

Referring to FIG. 12, FIG. 12 is a schematic diagram of increasing a focal length of a camera by using a pressure-sensitive key according to an embodiment of this application. As shown in (a) of FIG. 12, the mobile phone displays a photographing interface of a camera application, and a current focal length is 1x. If the user intends to increase the focal length, the user may perform a slide-up operation on the right pressure-sensitive key. In response to the slide-up operation by the user, the focal length of photographing of the camera application may be increased. As shown in (b) of FIG. 12, the focal length is increased from 1x to 1.1x. If the user intends to continue to increase the focal length, the user may not loosen the hand and continue to slide up. In response to the continuous slide-up operation by the user, the focal length of photographing of the camera application may continue to be increased. As shown in (c) of FIG. 12, the focal length is increased to 1.2x. In this case, if the user stops the slide-up operation, the focal length also stops increasing.

2) Reduce the focal length of the camera by performing a slide-down operation on the right pressure-sensitive key of the mobile phone.

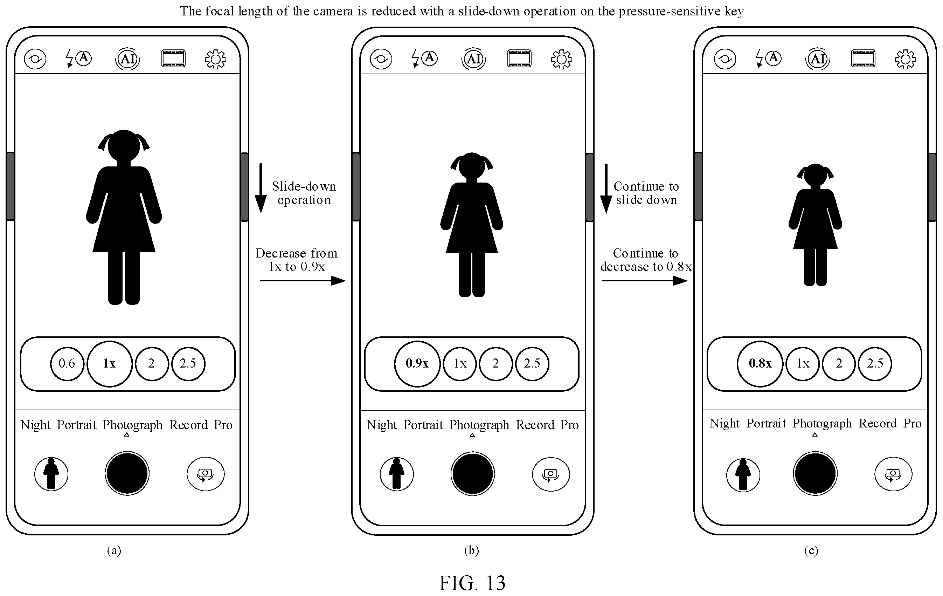

Referring to FIG. 13, FIG. 13 is a schematic diagram of reducing a focal length of a camera by using a pressure-sensitive key according to an embodiment of this application. As shown in (a) of FIG. 13, the mobile phone displays a photographing interface of a camera application, and a current focal length is 1x. If the user intends to reduce the focal length, the user may perform a slide-down operation on the right pressure-sensitive key. In response to the slide-down operation by the user, the focal length of photographing of the camera application may be reduced. As shown in (b) of FIG. 13, the focal length is reduced from 1x to 0.9x. If the user intends to continue to reduce the focal length, the user may not loosen the hand and continue to slide down. In response to the continuous slide-down operation by the user, the focal length of photographing of the camera application may continue to be reduced. As shown in (c) of FIG. 13, the focal length is reduced to 0.8x. In this case, if the user stops the slide-down operation, the focal length also stops decreasing.

It should be understood that FIG. 12 and FIG. 13 are described by using only an example in which a focal length of shooting in a camera application is adjusted by using the right pressure-sensitive key. However, in another embodiment, the focal length of shooting in the camera application may alternatively be adjusted by using a left pressure-sensitive key or a pressure-sensitive key configured at another position. This is not limited in this embodiment of this application.

It should be understood that, the focal length of shooting of the camera may alternatively be adjusted by using another touch operation on the pressure-sensitive key. This is not limited in this embodiment of this application.

Scenario 3: Audio/video switching is performed through a slide operation.

In an embodiment, a user may switch audio/video (audio or video) by performing a slide operation on a pressure-sensitive key.

In an example, when the terminal device plays audio/video (audio or video), for example, when an audio/video playback interface is displayed, in response to a slide operation (a slide-up operation or a slide-down operation) on a pressure-sensitive key, a previous or a next audio/video of the current audio/video may be switched to.

As an example, an example in which the audio/video is a short-form video is used. When the terminal device displays a short-form video application interface, in response to a slide-up operation on a pressure-sensitive key, a next short-form video of the current short-form video is switched to; and in response to a slide-down operation on a pressure-sensitive key, a previous short-form video of the current short-form video is switched to.

As an example, in a process of switching a short-form video according to a slide operation on a pressure-sensitive key, a short-form video may be further gradually switched according to a slide distance of the slide operation. For example, a short-form video may be gradually switched according to an increase of a slide distance of a slide operation. For example, the gradually switching a short-form video may include: A page of the current short-form video is gradually moved out from a display screen, and a page of a previous/next short-form video is gradually moved in.

1) Switch to a next short-form video by performing a slide-up operation on the right pressure-sensitive key of the mobile phone.

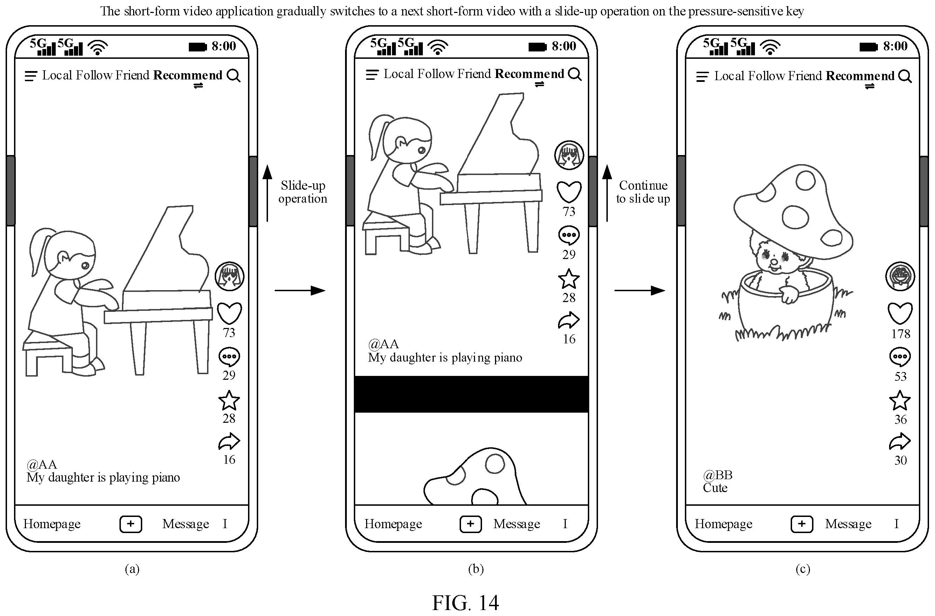

Referring to FIG. 14, FIG. 14 is a schematic diagram of switching to a next short-form video by using a pressure-sensitive key according to an embodiment of this application. As shown in (a) of FIG. 14, a mobile phone displays a short-form video application interface, and the short-form video application interface includes a page of a short-form video that is being played currently (a current short-form video). In this case, if a user intends to switch to a next short-form video, the user may perform a slide-up operation on a right pressure-sensitive key. In response to the slide-up operation by the user, the current short-form video may be switched to the next short-form video of the current short-form video. In an embodiment, the current short-form video may be gradually switched to the next short-form video according to a slide-up distance of the slide-up operation by the user. For example, referring to (b) of FIG. 14, (c) of FIG. 14, and (d) of FIG. 14, with a continuous slide-up operation by the user, a page of a current short-form video gradually moves out from the top of a display screen, and a page of a next short-form video gradually moves in from the bottom of the display screen, until the page of the current short-form video completely moves out and the page of the next short-form video completely moves in.

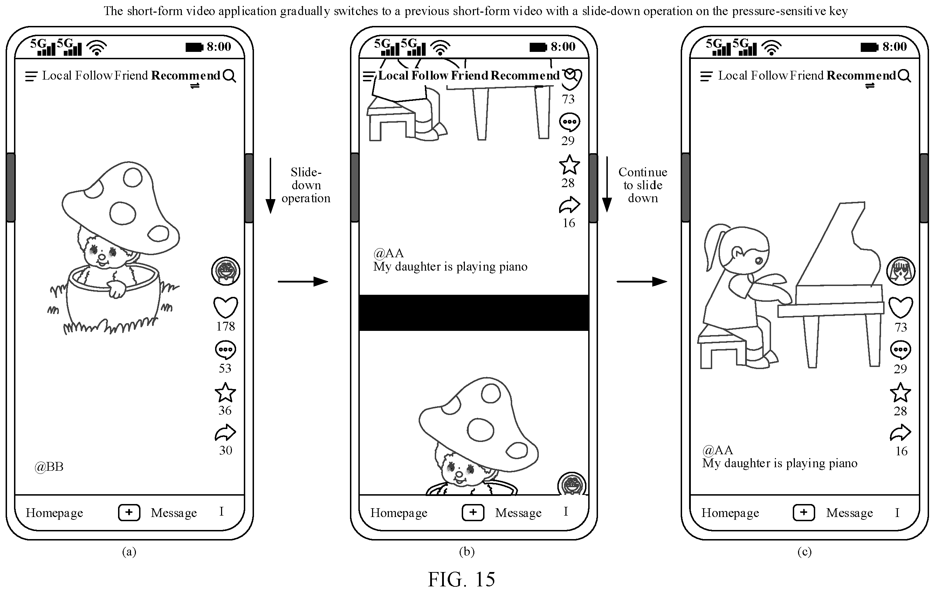

Referring to FIG. 15, FIG. 15 is a schematic diagram of switching to a previous short-form video by using a pressure-sensitive key according to an embodiment of this application. As shown in (a) of FIG. 15, a mobile phone displays a short-form video application interface, and the short-form video application interface includes a page of a short-form video that is being played currently (a current short-form video). In this case, if a user intends to switch back to a previous short-form video, the user may perform a slide-down operation on a right pressure-sensitive key. In response to the slide-down operation by the user, the current short-form video may be switched to the previous short-form video of the current short-form video. In an embodiment, the current short-form video may be gradually switched to the previous short-form video according to a slide-down distance of the slide-down operation by the user. For example, referring to (b) of FIG. 15, (c) of FIG. 15, and (d) of FIG. 15, with a continuous slide-down operation by the user, a page of a current short-form video gradually moves out from the bottom of a display screen, and a page of a previous short-form video gradually moves in from the top of the display screen, until the page of the current short-form video completely moves out and the page of the previous short-form video completely moves in.

It should be understood that FIG. 14 and FIG. 15 are described by using only an example in which a next short-form video is switched to by using a slide-up operation on the pressure-sensitive key, and a previous short-form video is switched to by using a slide-down operation on the pressure-sensitive key. However, in another embodiment, alternatively, a previous short-form video may be switched to by using a slide-down operation on the pressure-sensitive key, and a next short-form video may be switched to by using a slide-up operation on the pressure-sensitive key. This is not limited in this embodiment of this application.

It should be further understood that FIG. 14 and FIG. 15 are described by using only an example in which audio/video is switched by using the right pressure-sensitive key. However, in another embodiment, audio/video may alternatively be switched by using a left pressure-sensitive key or a pressure-sensitive key configured at another position. This is not limited in this embodiment of this application. In addition, the audio/video may alternatively be switched by using another touch operation on the pressure-sensitive key. This is not limited in this embodiment of this application either.

Fourth scenario: Displayed content is zoomed by using a slide operation.

In an embodiment, the user may zoom the displayed content (for example, a page or an image) by performing a slide operation on the pressure-sensitive key.

In an example, when the terminal device displays a map interface of a map application, in response to a slide operation (a slide-up operation or a slide-down operation) on a pressure-sensitive key, the map interface may be zoomed. For example, in response to a slide-up operation on the pressure-sensitive key, the map interface is zoomed in; and in response to a slide-down operation on the pressure-sensitive key, the map interface is zoomed out.

In an example, in a process of zooming displayed content according to the slide operation on the pressure-sensitive key, the displayed content may be further gradually zoomed according to a slide distance of the slide operation. The zooming step may be set according to an actual requirement. For example, as the slide distance of the slide-up operation increases, the displayed content is gradually zoomed in; and as the slide distance of the slide-down operation increases, the displayed content is gradually zoomed out.

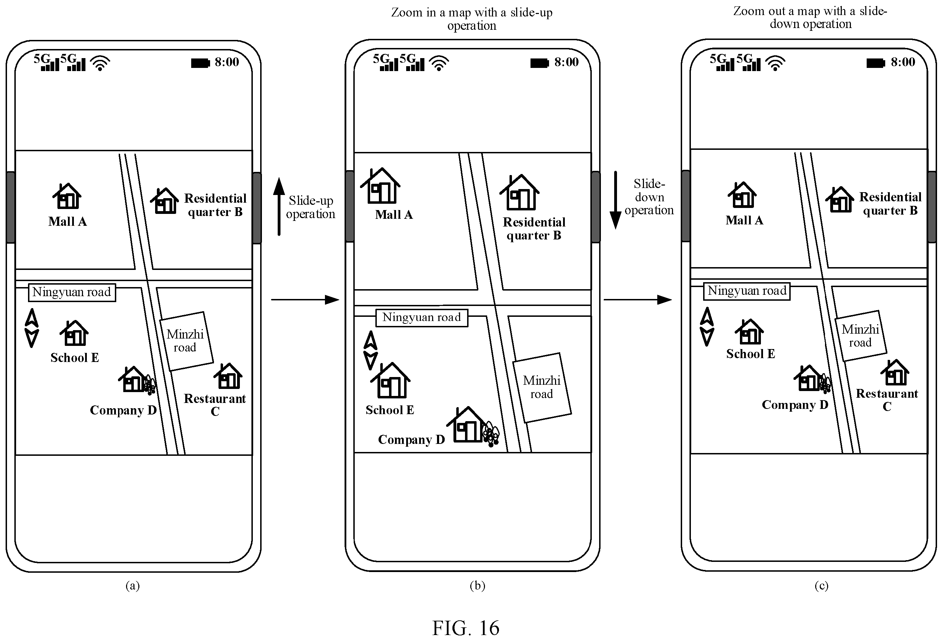

Referring to FIG. 16, FIG. 16 is a schematic diagram of zooming displayed content by using a pressure-sensitive key according to an embodiment of this application. As shown in (a) of FIG. 16, a mobile phone displays an application interface of a map application, and the application interface includes a map. If the user intends to zoom in the map, the user may perform a slide-up operation on the right pressure-sensitive key. In response to the slide-up operation by the user, as shown in (b) of FIG. 16, the map may be zoomed in and displayed. In addition, if the user responds and zooms out the map, the user may further perform a slide-down operation on the right pressure-sensitive key. In response to the slide-down operation by the user, as shown in (c) of FIG. 16, the map may be zoomed out and displayed.

It should be understood that FIG. 16 is described only by using an example in which displayed content is zoomed by using the right pressure-sensitive key. However, in another embodiment, alternatively, displayed content may be zoomed by using a pressure-sensitive key configured at another position, such as the left pressure-sensitive key. This is not limited in this embodiment of this application. In addition, the displayed content may alternatively be zoomed by using another touch operation on the pressure-sensitive key. This is not limited in this embodiment of this application either.

This embodiment of this application is only described schematically by using an example in which control is performed by using a slide operation in the foregoing scenario 2, scenario 3, and scenario 4. In another embodiment, alternatively, the control may be performed by using another touch operation, for example, the control may be performed by using a continuous operation such as press + slide, or light long-press + slide on a pressure-sensitive key. This is not limited in this embodiment of this application.

In addition, this embodiment of this application only uses the foregoing four scenarios in which the user interface is controlled by using the touch operation on the pressure-sensitive key as an example for description. It should be understood that, controlling the user interface by using the touch operation on the pressure-sensitive key may also be applied to other scenarios, and examples are not described one by one in this embodiment of this application.

A terminal involved in the embodiments of this application is described before an operation response method provided in the embodiments of this application is described in detail below.

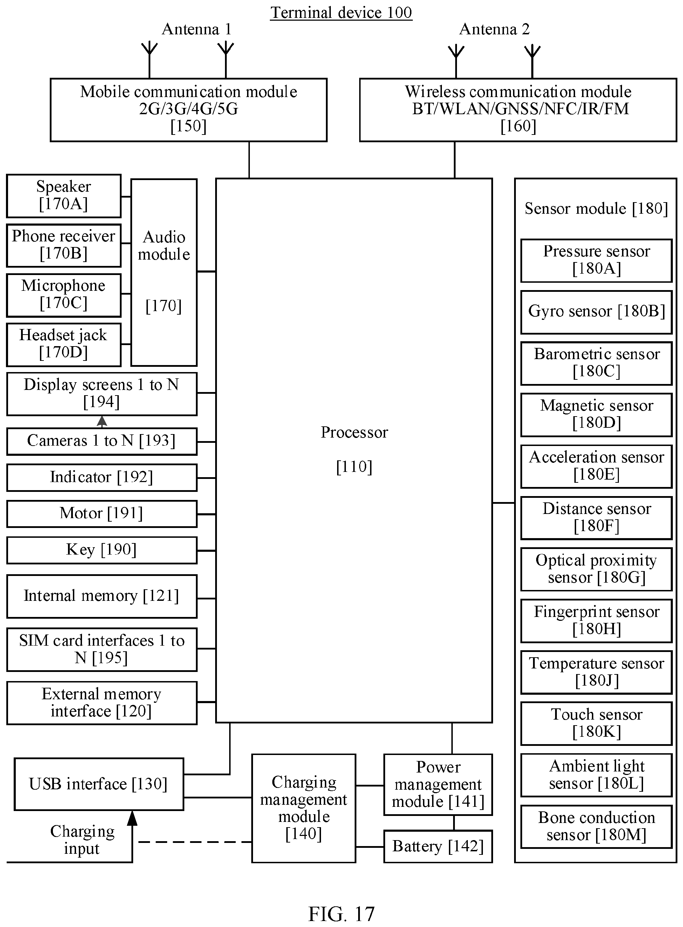

FIG. 17 is a schematic diagram of a structure of a terminal device according to an embodiment of this application. Referring to FIG. 17, the terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, a pressure-sensitive key, and the like. The sensor module 180 may include a pressure sensor 180A, a gyro sensor 180B, a barometric sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, and a bone conduction sensor 180M.

It may be understood that the structure illustrated in embodiments of this application does not constitute a specific limitation to the terminal device 100. In some other embodiments of this application, the terminal device 100 may include more or fewer components than those shown in the figure, or some components may be combined, or some components may be split, or a different component deployment may be used. The component shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated in one or more processors.

The controller may be a nerve center and a command center of the terminal device 100. The controller may generate an operation control signal based on instruction operation code and a timing signal, to complete control of instruction fetching and instruction execution.

The processor 110 may be further provided with a memory, configured to store instructions and data. In some embodiments, the memory in the processor 110 is a cache. The memory may store instructions or data that is just used or cyclically used by the processor 110. If needing to use the instructions or the data again, the processor 110 may directly invoke the instructions or the data from the memory, to avoid repeated access, and reduce waiting time of the processor 110, thereby improving system efficiency.

In some embodiments, the processor 110 may include one or more interfaces, for example, may include an inter-integrated circuit (inter-integrated circuit, 12C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the terminal device 100 may be implemented by using the antenna 1, the antenna 2, the mobile communications module 150, the wireless communication module 160, the modem processor, the baseband processor, and the like.

The antenna 1 and the antenna 2 are configured to transmit and receive electromagnetic wave signals. Each antenna in the terminal device 100 may be configured to cover a single communication frequency band or a plurality of communication frequency bands. Different antennas may also be reused to increase utilization of the antennas. For example, the antenna 1 may be reused as a diversity antenna of a wireless local region network. In some other embodiments, the antenna may be used in combination with a tuning switch.

The mobile communication module 150 can provide a solution for wireless communication including 2G/3G/4G/5G and the like applied to the terminal device 100. The mobile communication module 150 may include at least one filter, a switch, a power amplifier, a low noise amplifier (low noise amplifier, LNA), or the like. The mobile communication module 150 may receive an electromagnetic wave by using the antenna 1, perform processing such as filtering or amplification on the received electromagnetic wave, and transmit a processed electromagnetic wave to a modem processor for demodulation. The mobile communication module 150 may further amplify a signal obtained after modulation by the modem processor, and convert an amplified signal into an electromagnetic wave for radiation by using the antenna 1. In some embodiments, at least some functional modules of the mobile communication module 150 may be disposed in the processor 110. In some embodiments, at least some functional modules of the mobile communication module 150 and at least some modules of the processor 110 may be disposed in the same device.

The wireless communication module 160 may provide solutions for wireless communication applied to the terminal device 100 and including wireless local region networks (wireless local region networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), and infrared (infrared, IR). The wireless communication module 160 may be one or more devices that integrate at least one communication processing module. The wireless communication module 160 receives an electromagnetic wave through the antenna 2, performs frequency modulation and filtering on an electromagnetic wave signal, and sends a processed signal to the processor 110. The wireless communication module 160 may also receive a to-be-sent signal from the processor 110, perform frequency modulation on and amplify the to-be-sent signal, and convert the to-be-sent signal into an electromagnetic wave by using the antenna 2 for radiation.

The terminal device 100 implements a display function by using the GPU, the display screen 194, the application processor, and the like. The GPU is a microprocessor for image processing, and is connected to the display screen 194 and the application processor. The GPU is configured to execute mathematical and geometric calculation, and is configured to render graphics. The processor 110 may include one or more GPUs, and the GPU executes program instructions to generate or change display information.

The display screen 194 is configured to display an image, a video, or the like. The display screen 194 may include a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a miniLED, a microLED, a micro-OLED, a quantum dot light emitting diode (quantum dot light emitting diodes, QLED), or the like. In some embodiments, the terminal device 100 may include one or N display screens 194, where N is an integer greater than 1.

The terminal device 100 may implement a photographing function by using the ISP, the camera 193, the video codec, the GPU, the display screen 194, the application processor, and the like.

The ISP is used to process data fed back by the camera 193. For example, during shooting, a shutter is opened, light is transmitted to a camera photosensitive element by using a lens, an optical signal is converted into an electrical signal, and the camera photosensitive element transmits the electrical signal to the ISP for processing, to convert the electrical signal into an image visible to a naked eye. The ISP may further perform algorithm optimization on noise, brightness, and complexion of the image. The ISP may further optimize parameters such as exposure and a color temperature of a shooting scenario. In some embodiments, the ISP may be disposed in the camera module 193.

The camera 193 is configured to capture a still image or video. The lens generates an optical image for an object, and the optical image is projected to the photosensitive element. The photosensitive element may be a charge-coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in standard RGB and YUV formats. In some embodiments, the terminal device 100 may include one or N cameras 193, where N is an integer greater than 1.

The digital signal processor is configured to process a digital signal, and may further process another digital signal in addition to the digital image signal. For example, when the terminal device 100 performs frequency channel selection, the digital signal processor is configured to perform Fourier transformation and the like on frequency channel energy.

The video codec is configured to: compress or decompress a digital video. The terminal device 100 supports one or more video codecs. In this way, the terminal device 100 can play or record videos in a plurality of encoding formats, for example, moving picture experts group (moving picture experts group, MPEG)1, MPEG2, MPEG3, and MPEG4.

The NPU is a neural-network (neural-network, NN) computing processor, quickly processes input information by referring to a structure of a biological neural network, for example, a transmission mode between neurons in a human brain, and may further continuously perform self-learning. Applications such as intelligent cognition of the terminal device 100, such as image recognition, facial recognition, speech recognition, and text understanding, can be implemented by using the NPU.

The external memory interface 120 may be configured to be connected to an external memory card such as a Micro SD card, to expand a storage capability of the terminal device 100. The external memory card communicates with the processor 110 by using the external memory interface 120, to implement a data storage function, for example, to store files such as music and a video in the external memory card.

The internal memory 121 may be configured to store computer-executable program code, and the computer-executable program code includes instructions. The processor 110 runs the instructions stored in the internal memory 121, to perform various function applications and data processing of the terminal device 100. The internal storage 121 may include a program storage region and a data storage region. The program storage region may store an operating system, an application needed by at least one function (for example, a sound playback function or an image display function), and the like. The data storage region may store data (for example, audio data and a phone book) in a process of using the terminal device 100, and the like. In addition, the internal memory 121 may include a high-speed random access memory, and may further include a non-volatile memory, for example, at least one magnetic disk storage device, a flash memory device, or a universal flash storage (universal flash storage, UFS).

The terminal device 100 may implement an audio function, for example, music playback and recording, by using the audio module 170, the speaker 170A, the phone receiver 170B, the microphone 170C, the headset jack 170D, the application processor, and the like.

The pressure sensor 180A is configured to sense a pressure signal, and can convert the pressure signal into an electrical signal. In some embodiments, the pressure sensor 180A may be disposed in the display screen 194. There are various types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal device 100 determines intensity of pressure based on a change of the capacitance.

In some embodiments, when a touch operation acts on a touch surface of the pressure-sensitive key, the terminal device 100 may detect intensity of the touch operation based on the pressure sensor 180A. The terminal device 100 may further calculate a touch position based on a detection signal of the pressure sensor 180A. In some embodiments, touch operations that are applied to a same touch position but have different touch operation intensity may correspond to different operation instructions.

In some embodiments, when a touch operation is performed on the display screen 194, the terminal device 100 detects intensity of the touch operation based on the pressure sensor 180A. The terminal device 100 may further calculate a touch position based on a detection signal of the pressure sensor 180A. In some embodiments, touch operations that are applied to a same touch position but have different touch operation intensity may correspond to different operation instructions. For example, when a touch operation whose touch operation intensity is less than a pressure threshold is performed on a "Messages" application icon, an instruction for viewing an SMS message is executed. When a touch operation whose touch operation intensity is greater than or equal to the pressure threshold is performed on the short message application icon, an instruction of creating a new short message is executed.

The touch sensor 180K is also referred to as a "touch panel". The touch sensor 180K may be disposed on the display screen 194. The touch sensor 180K and the display screen 194 form a touchscreen, which is also referred to as a "touch screen". The touch sensor 180K is configured to detect a touch operation performed on or near the touch sensor 180K. The touch sensor 180K may transfer the detected touch operation to the application processor to determine a touch event type. A visual output related to the touch operation may be provided via the display screen 194. In some other embodiments, the touch sensor 180K may alternatively be disposed on a surface of the terminal device 100 in a position different from that of the display screen 194. For example, the touch sensor 180K may be disposed on a surface of the pressure-sensitive key. The touch sensor 180K and the surface of the pressure-sensitive key form a touch surface of the pressure-sensitive key, to be used for performing a touch operation.

The key 190 includes a power key, a volume key, or the like. The key 190 may be a mechanical key, or may be a touch key, for example, the pressure-sensitive key described in this embodiment of this application. The terminal device 100 may receive a key input, and generate a key signal input related to user settings and function control of the terminal device 100.

An operating system runs on the foregoing components, for example, an iOS operating system developed by Apple Inc., an Android open-source operating system developed by Google Inc., or a Windows operating system developed by Microsoft Corporation. An application may be installed and run in the operating system.

Next, a software system of the terminal device 100 is described.

The software system of the terminal device 100 may use a layered architecture, an event-driven architecture, a microkernel architecture, a micro-service architecture, or a cloud architecture. In this embodiment of this application, an Android (Android) system with a layered architecture is used as an example to describe the software system of the terminal device 100.

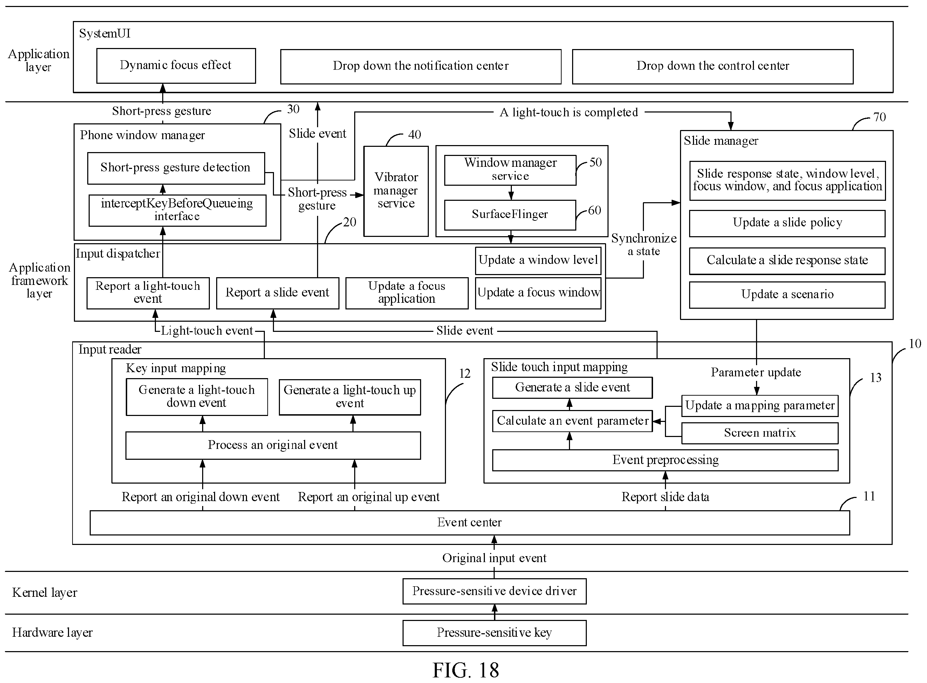

FIG. 18 is a block diagram of a software system of the terminal device 100 according to an embodiment of this application. As shown in FIG. 18, in a layered architecture, software is divided into several layers, and each layer has a clear role and task. The layers are in communication with each other through a software interface. In some embodiments, the Android system is divided into four layers, which are respectively, from top to bottom, an application layer (also referred to as an applications layer), an application framework layer (also referred to as an applications framework layer), and a kernel layer.

The application layer may include a series of application packages. As shown in FIG. 18, the application packages may include a system application (System UI). The System UI is a first user-visible application in a system startup process of the electronic device, for example, a lock screen displayed after the electronic device is powered on, or a desktop or a status bar displayed after the electronic device is unlocked. The System UI is a set of UI components that provide system-level information display and interaction for the user, and may be configured to control display of a desktop image. In this embodiment of this application, the System UI may control displaying of the desktop image, to display a dynamic focus effect in a status bar, drop down and display a notification center or a control center, receive a notification center or a control center, or the like.

The application framework layer provides an application programming interface (application programming interface, API) and a programming framework for applications at the application layer. The application framework layer includes some predefined functions.

Referring to FIG. 18, the application framework layer may include an input reader (InputReader) 10, an input dispatcher (InputDispatcher) 20, a phone window manager (PhoneWindowManager) 30, a vibrator manager service (VibratorManagerService) 40, a window manager service (WindowManagerService) 50, a SufaceFlinger 60, and a slide manager (SlideManager) 70.

The input reader 10 is configured to read an original input event (including information such as touch coordinates and a time stamp of a touch operation) on the pressure-sensitive key reported by an input device driver in the kernel layer, and convert the read original input event into a standard input event that can be recognized and processed by an input system. The input reader 10 may include an event center 11, a key input mapping module 12, a slide touch input mapping module 13, and the like.

The input dispatcher 20 is configured to dispatch an input event reported by the input reader 10. For example, a key event such as a light-touch event may be reported to the phone window manager 30, and a slide event may be reported to the System UI of the applications layer.

The phone window manager 30 is configured to perform gesture detection according to the light-touch event dispatched by the input dispatcher 20, for example, detect a particular gesture such as a long-press gesture.

The vibrator manager service 40 is configured to manage a vibrator, for example, may trigger the vibrator to vibrate. The vibrator may be a vibrator in the pressure-sensitive key, or may be another vibrator configured in the terminal device other than the vibrator in the pressure-sensitive key. This is not limited in this embodiment of this application.

The window manager service 50 and the SurfaceFlinger 60 are configured to update data such as a focus application, a focus window, and a window level.

The slide manager 70 is configured to maintain slide management information, and may further update a mapping parameter in the slide touch input mapping module 13 according to the slide management information. The slide management information is related information used for performing slide management, and may include one or more of focus application information, focus window information, a window level, a slide response state, a slide policy, and an application scenario.

Next, for ease of understanding, the foregoing modules in the application framework layer are described in blocks.

### First: Scenario recognition part

In an embodiment, a pressure-sensitive key may have different functions in different scenarios. The scenario recognition part may recognize different scenarios, and further update different slide policies based on the different scenarios.

In an embodiment, the scenario recognition part may perform scenario recognition based on one or more types of data such as a focus application, a focus window, and a window level.

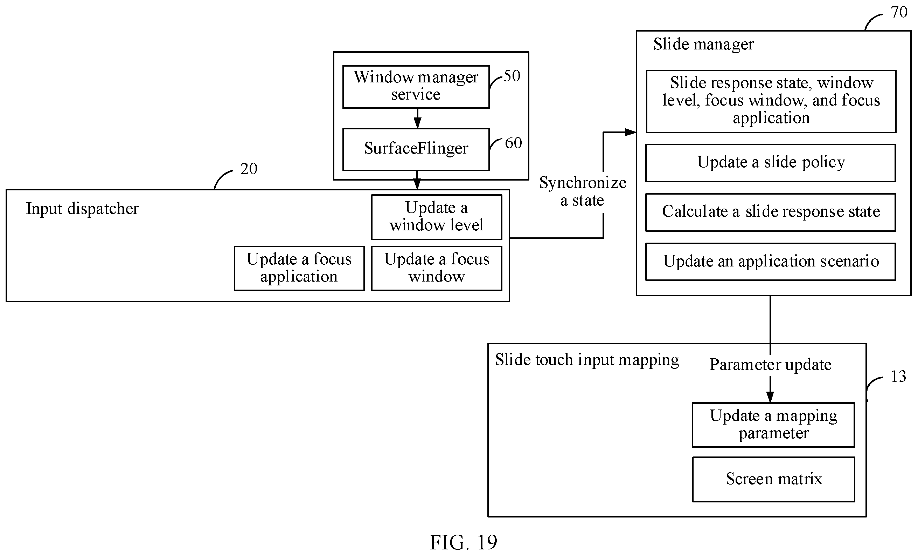

Referring to FIG. 19, FIG. 19 is a schematic diagram of logic of a scenario recognition part according to an embodiment of this application. As shown in FIG. 19, the scenario recognition part includes some modules of a window manager service 50, a SurfaceFlinger 60, a slide manager 70, and an input dispatcher 20.

For interface switching or window change of an application, window data and application data are synchronized to the SurfaceFlinger 60 by using the window manager service 50. The SurfaceFlinger 60 may update data such as focus application information, focus window information, and a window level to the input dispatcher 20 according to the data synchronized by window manager service 50.

As an example, the input dispatcher 20 may obtain the foregoing scenario information such as the focus application information, the focus window information, and the window level by using a related interface of the SurfaceFlinger 60. In addition, the input dispatcher 20 may further synchronize data such as a focus application, a focus window, and a window level to the slide manager 70.

The slide manager 70 is configured to maintain slide management information, and may further update a mapping parameter in the slide touch input mapping module 13 according to the slide management information. The slide manager 70 may be a newly added module in system services.

In an embodiment, the slide management information may include one or more of focus application information, focus window information, a window level, a slide response state, a slide policy, and scenario information.

Next, these pieces of information are separately described.

The slide response state is used for indicating whether to listen to and process a slide event on a pressure-sensitive key. For example, the slide response state may include an enabled state and a disabled state. When the slide response state is the enabled state, the terminal device may listen to and process the slide event on the pressure-sensitive key. When the slide response state is the disabled state, the terminal device does not listen to or process the slide event on the pressure-sensitive key.

In an embodiment, the slide manager may update the slide response state to the enabled state when the device state satisfies a preset condition. The preset condition includes that a third notification is received, that the focus window is a notification center window or a control center window, or the like. In addition, the phone window manager may update the slide response state to the disabled state when the device state does not satisfy the preset condition, to reduce a probability of accidental touch of the user.

The scenario is used to indicate a use scenario of the current device. For example, the scenario may include a drop-down notification scenario (for example, a desktop scenario), an audio/video playback scenario (for example, a short-form video scenario such as Douyin), a camera scenario, a map scenario, and a gallery scenario. For different scenarios, different slide policies may be used to control the user interface.

The slide policy is used for indicating a condition that a slide operation for controlling the user interface needs to satisfy, that is, what slide operation is used to control the user interface. For example, the slide policy may include: a slide direction, a slide finger requirement (for example, a single-finger or a two-finger), a pressure-sensitive key identifier (for example, a left pressure-sensitive key or a right pressure-sensitive key), and a slide distance requirement. For example, for a control solution of dropping down the notification center by sliding down a left pressure-sensitive key, a slide policy may include: a downward slide, a single-finger operation, and an identifier of a left pressure-sensitive key, and the like.

The mapping parameter is a related parameter used for mapping a slide event on the pressure-sensitive key to a slide event on the screen, and may include, for example, at least one of the following parameters: a start point, a slide finger requirement (whether to be a single finger or a plurality of fingers), a slide direction, a slide gesture, a slide distance mapping ratio, and the like. The mapping parameter herein affects creation of a subsequent slide event and a response to the slide event.

As an example, in different scenarios, different mapping parameters may be updated, to simulate a slide event on a pressure-sensitive key as different slide events on a screen. For example, in a scenario of dropping down a notification such as a desktop, a slide event on a pressure-sensitive key is converted into a slide event of sliding downward from a position close to the top of a screen as a start point, to simulate a notification drop-down operation; in a short-form video scenario such as Douyin, a slide event on a pressure-sensitive key is converted into a slide event of sliding from the middle of a screen, to simulate a page flip operation; in a camera scenario, a slide event on a pressure-sensitive key is converted into a slide event of two-finger opening or two-finger pinching on a screen, to simulate a focal length adjustment operation; and in scenarios such as a gallery and a map, a slide event on a pressure-sensitive key is converted into a slide event of two-finger opening or two-finger pinching on a screen, to simulate an operation such as zooming.

### Second: Key event processing part

The key event processing part is configured to generate a standard key event (keyevent) that can be recognized and processed by the input system according to an original key event on a pressure-sensitive key reported by a pressure-sensitive device driver. The logic of this part of and the pressure-sensitive device driver are mainly to listen to a light-touch operation by the user on a pressure-sensitive key, and encapsulate down (down) and up (up) operations into down and up key events.

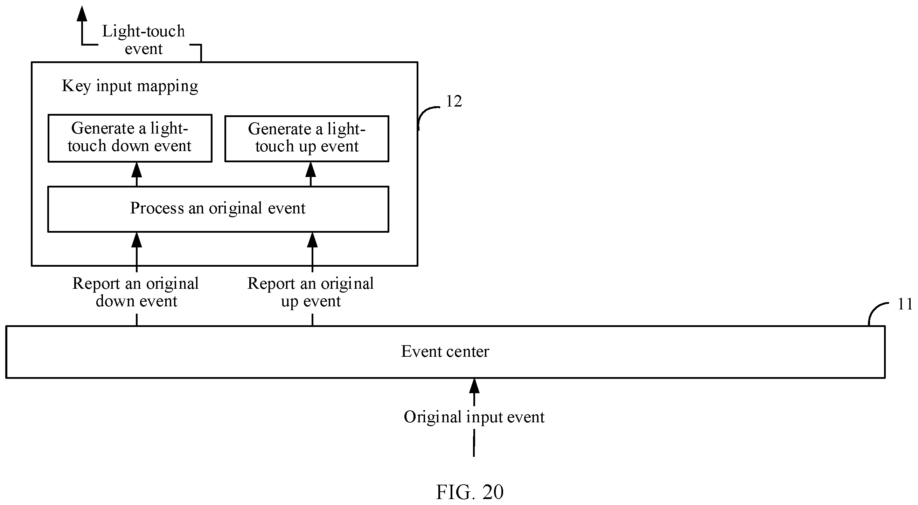

Referring to FIG. 20, FIG. 20 is a schematic diagram of logic of a key event processing part according to an embodiment of this application. As shown in FIG. 20, the key event processing part includes an event center 11 and a key input mapping 12 in the input reader 10.

The event center 11 is configured to receive the original input event reported by the pressure-sensitive device driver in the kernel layer, and report the original input event to different processing modules according to an event type of the original input event. The event type may include types such as a key event and a slide event.

In an embodiment, the event center 11 is configured to receive the original input event reported by the pressure-sensitive device driver in the kernel layer. If the original input event is a key event, the original key event is reported to the key input mapping module 12 for processing. If the original input event is a slide event, slide data of the original slide event is reported to the slide touch input mapping module 13 for processing.

The key input mapping module 12 is configured to process the original key event on the pressure-sensitive key, for example, process the original key event to generate a standard key event.

In an embodiment, the key event may include such two types as a down (down) event and an up (up) event. Using an example in which the original key event is a key event of a light-touch (light-press) operation, for an original down event on a pressure-sensitive key, the key input mapping module 12 may process the original down event, to generate a standard light-touch down event. For the original up event on the pressure-sensitive key, the press input mapping module may process the original up event, to generate a standard light-touch up event. After generating the standard light-touch event, the key input mapping module 12 may further report the light-touch event to the input dispatcher 20.

### Third: Gesture recognition part

The gesture recognition part is mainly used for performing gesture recognition according to a key event, for example, recognizing a particular gesture such as a long-press gesture. The long-press gesture is a light-press gesture whose light-press duration reaches particular duration.

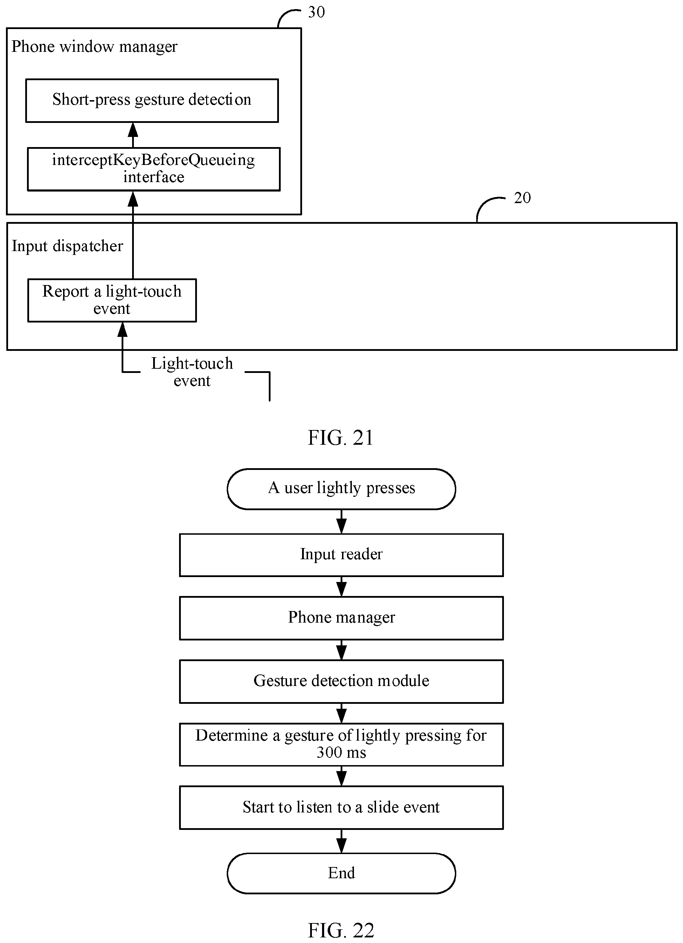

Referring to FIG. 21, FIG. 21 is a schematic diagram of logic of a gesture recognition part according to an embodiment of this application. As shown in FIG. 21, this part includes an input dispatcher 20 and a phone window manager 30.

The input dispatcher 20 may dispatch a key event such as a light-touch event reported by the input reader. For example, the key event may be reported to the phone window manager 30. The phone window manager 30 is configured to perform gesture detection according to the key event such as the light-touch event reported by the input dispatcher 20, for example, detect a particular gesture such as a long-press gesture.

In an embodiment, the phone window manager 30 may include an event obtaining interface and a long-press gesture detection module. The event obtaining interface is configured to obtain a light-touch event reported by an event dispatcher. The event obtaining interface may be an interceptKeyBeforeQueueing interface or the like. The long-press gesture detection module is configured to detect a long-press gesture according to the light-touch event.

In an example, the gesture detection may be implemented by using a related interface, for example, an interface provided by SingleKeyGestureDetector. For example, key values of a left pressure-sensitive key and a right pressure-sensitive key may be defined as VOLUME_TICKL and POWER_TICKLE respectively, and SlideVoluemKeyRule and SlidePowerKeyRule are defined by using an interface provided by SingleKeyGestureDetector, to an interface method in SingleKeyGestureDetector. SingleKeyRule.

In an example, an example in which the long-press gesture is a light-press operation gesture with a light-press for 300 ms is used. After the user lightly presses a pressure-sensitive key, processing modules and related operations involved in a gesture recognition procedure may be shown in FIG. 22.

### Fourth: Multi-step operation after completion of a gesture

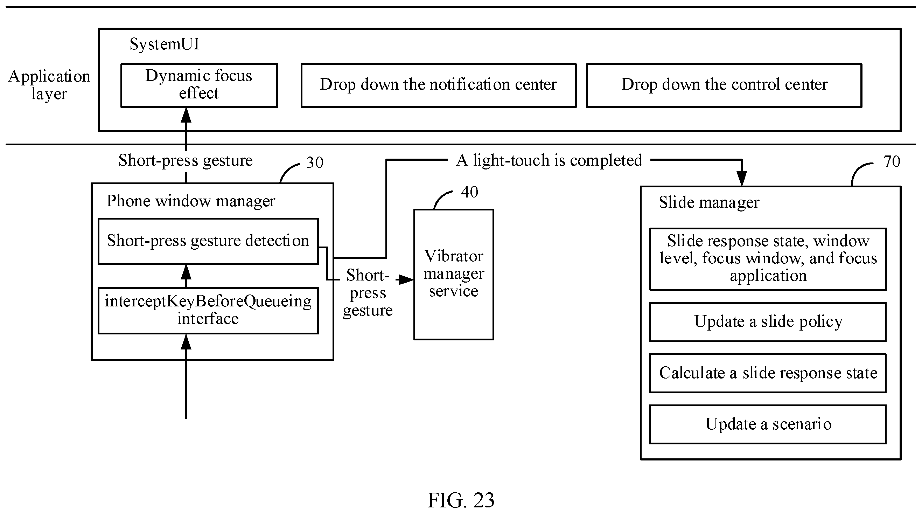

Referring to FIG. 23, FIG. 23 is a schematic diagram of logic of a multi-step operation part after completion of a gesture according to an embodiment of this application. As shown in FIG. 23, this part may include a phone window manager 30, a vibrator manager service 40, and a slide manager 70.
1) When detecting a particular gesture, the phone window manager 30 may send a notification indicating that the particular gesture is detected to a System UI, so that the System UI responds to the particular gesture according to the notification.

For example, the System UI may display a dynamic focus effect at the top (for example, a top status bar) when receiving a notification that a long-press gesture is detected. For example, for a long-press gesture on a left pressure-sensitive key, a dynamic focus effect is displayed on the top left; and for a long-press gesture on a right pressure-sensitive key, a dynamic focus effect is displayed on the top right.

2) When detecting a particular gesture, the phone window manager 30 may send a notification instructing to vibrate to the vibrator manager service 40, so that the vibration manager service triggers, according to the notification, a vibrator to vibrate. For example, the vibration manager service may trigger, according to the notification, the vibrator to slightly vibrate.

As an example, the phone window manager 30 may instruct, by using a related interface of a vibration service, the vibrator to vibrate.

3) When detecting a particular gesture, the phone window manager 30 may send a notification indicating that a light-touch is completed to the slide manager 70, so that the slide manager 70 updates slide management information such as a slide response state, a slide policy, or a scenario according to the notification. For example, the slide manager 70 may switch the slide response state to an enabled state according to the notification.

As an example, the input dispatcher 20 may further send a light-touch start notification to the slide manager 70 after receiving a light-touch down event reported by the input reader 10. The phone window manager 30 may further send a notification indicating that a light-touch is completed to the slide manager 70 when obtaining a light-touch up event. When the slide response state is a disabled state, the slide manager 70 may switch the slide response state to the enabled state when determining, according to the light-touch start notification and the light-touch completion notification, that the duration of the light-touch reaches particular duration (for example, 300 ms).

Fourth: Mapping parameter update and slide event processing part

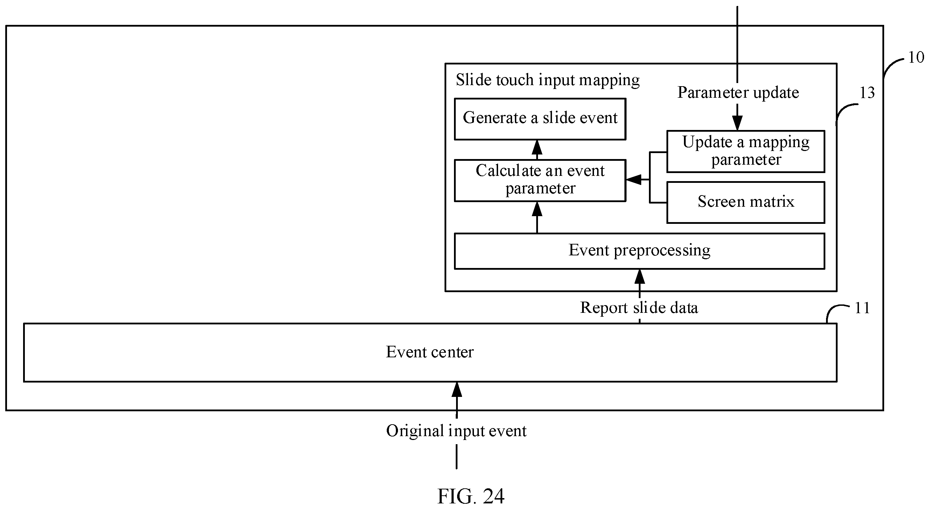

FIG. 24 is a schematic diagram of logic of a mapping parameter update and slide event processing part according to an embodiment of this application. Referring to FIG. 24, this part includes a slide touch input mapping module 13. The slide touch input mapping module 13 is configured to process slide data of an original slide event, for example, may process the slide data of the original slide event, to generate a standard slide event that can be recognized and processed by an input system.

The slide window management 70 may update a mapping parameter in the slide touch input mapping module 13 according to related slide management information, for example, update the mapping parameter to a mapping parameter corresponding to a desktop scenario.

The mapping parameter is a related parameter used for mapping a slide event on the pressure-sensitive key to a slide event on the screen, and may include, for example, a start point, and may further include at least one of the following parameters: a slide finger requirement (whether to be a single finger or a plurality of fingers), a slide direction, a slide gesture, a slide distance mapping ratio, and the like.

In an example, for a mapping parameter updated after a long-press gesture on a pressure-sensitive key, a start point in the mapping parameter may indicate a slide start point mapped to a screen. The start point may include a slide-up start point and a slide-down start point.

The slide-up start point may be located at the top of the screen or be at a position away from the top of the screen by a preset distance, to map a slide-down operation on a pressure-sensitive key to an operation of sliding down from where is close to the top of the screen. In addition, for a left pressure-sensitive key, the slide-up start point may be further located on the left side of the screen, to map a slide-down operation on the pressure-sensitive key to an operation of sliding down from the top left of the screen. For example, the start point may be located at 1/3 of the width of the screen (that is, a distance to the left side of the screen is 1/3 of a distance to the right side of the screen), or located at 1/4 of the width of the screen (that is, a distance to the left side of the screen is 1/3 of a distance to the right side of the screen). In an example, screen coordinates of the start point in a screen coordinate system include an X-axis coordinate and a Y-axis coordinate, the X-axis coordinate is a position at 1/3 of the width of the screen, and the Y-axis coordinate is 20. The screen coordinate system is a coordinate system in which a vertex at an upper left corner of the screen is used as an origin, a width direction of the screen is an X axis, and a height direction of the screen is a Y axis coordinate.

A slide-down start point may be at a lower position on the screen, for example, a position on a lower half part or on a center line of upper and lower parts of the screen, to map a slide-down operation on the pressure-sensitive key to an operation of sliding up from a lower position on the screen. In addition, for a left pressure-sensitive key, the slide-down start point may be further located on the left side of the screen, to map a slide-up operation on the pressure-sensitive key to an operation of sliding up on the left side of the screen. For example, the start point may be located at 1/3 of the width of the screen (that is, a distance to the left side of the screen is 1/3 of a distance to the right side of the screen), or located at 1/4 of the width of the screen (that is, a distance to the left side of the screen is 1/3 of a distance to the right side of the screen). In an example, screen coordinates of the start point in a screen coordinate system include an X-axis coordinate and a Y-axis coordinate, the X-axis coordinate is a position at 1/3 of the width of the screen, and the Y-axis coordinate is a position of a center line of an upper part and a lower part of the screen.

In an embodiment, the slide touch input mapping module 13 may map an original slide event on a pressure-sensitive key to a slide event on the screen (a screen slide event for short below), and report the generated screen slide event to the input dispatcher 20, so that the input dispatcher 20 reports the screen slide event to the System UI.

For example, the slide touch input mapping module 13 may maintain a mapping parameter and a screen matrix. The screen matrix may include screen information such as a screen direction and a screen width and height. For the original slide event reported by the event center 11, the slide touch input mapping module 13 may preprocess slide data of the original slide event, then perform calculation according to the stored mapping parameter and screen matrix, and the preprocessed slide data, to obtain a slide event parameter, and generate a slide event on the screen according to the calculated slide event parameter.

In addition, the slide touch input mapping module 13 may further report the generated slide event to the System UI, so that the System UI drops down the notification center or the control center according to the slide event. For example, the notification center is dropped down and displayed according to a slide event on the left pressure-sensitive key, and the control center is dropped down and displayed according to a slide event on the right pressure-sensitive key.

The kernel layer (kernel layer) is a layer between hardware and software. The kernel layer includes at least a pressure-sensitive device driver, and may further include a display driver, a sensor driver, a camera driver, an audio driver, and the like. The pressure-sensitive device driver is configured to report an original touch event generated by a touch operation by the user on a pressure-sensitive key, for example, report an original key event (or key data) and an original slide event (or slide data) on the pressure-sensitive key.

The slide data is data generated by a slide operation on the pressure-sensitive key, and may include an offset value on the pressure-sensitive key, and the like. A subsequent slide event may be generated according to the offset value on the pressure-sensitive key. For example, the offset value on the pressure-sensitive key may be between 0 and 200.

The hardware layer includes at least a pressure-sensitive key, and there may be one or more pressure-sensitive keys. The user may perform a touch operation such as press or slide on the pressure-sensitive key. The hardware layer may further include a display screen and the like. This is not limited in this embodiment of this application.

It may be noted that the layers in the software structure shown in FIG. 18 and the components included in each layer do not constitute a specific limitation on the terminal device. In some other embodiments, the terminal device may include more layers than those shown in the figure, for example, a system library and a hardware abstraction layer (hardware abstraction layer, HAL). In addition, each layer may include more or fewer components than those shown in the figure. This is not limited in this application.

It should be understood that the embodiment of FIG. 18 is described only by using an example in which the System UI receives the slide event reported by the slide touch input driver and the input dispatcher, and then responds to the slide event. However, in another embodiment, the System UI may alternatively directly listen to an original slide event or slide data reported by the pressure-sensitive device driver, then convert the original slide event or slide data into a slide event on the screen, and respond to the slide event.

It may be understood that, to implement the operation response method in embodiments of this application, the terminal device includes corresponding hardware and/or software modules for performing various functions. Algorithm steps in the examples described with reference to the embodiments disclosed in this specification can be implemented in this application in a form of hardware or a combination of hardware and computer software. Whether a function is performed by hardware or hardware driven by the computer software depends on particular applications and design constraint conditions of the technical solutions. A person of skill in the art may use different methods to implement the described functions with reference to the embodiments for each particular application.

It should be noted that although the Android system is used as an example for description in the embodiments of this application, a basic principle thereof is also applicable to a terminal device based on an operating system such as iOS or Windows.

The following uses an example in which the user performs a light-press + slide-down operation on a pressure-sensitive key in a desktop scenario, to describe an example of a working procedure of software and hardware of the terminal device 100.

When the pressure-sensitive key receives a touch operation, a corresponding hardware interrupt is transmitted to the pressure-sensitive device driver of the kernel layer. The pressure-sensitive device driver processes the touch operation into an original input event (including information such as touch coordinates and a time stamp of the touch operation). The original input event is stored at the kernel layer. The application framework layer obtains the original input event from the kernel layer. For example, an event center in the input reader included in the application framework layer may obtain the original input event. If the touch operation is a light-press (light-touch) operation, the event center reports the original input event to the key input mapping module, and the key input mapping module processes the original input event, generates a light-touch down event, and reports the light-touch down event to the input dispatcher for dispatching. The input dispatcher may dispatch the light-touch down event when the focus application is a particular application such as a desktop application. The phone window manager may obtain, by using a related interface (for example, an interceptKeyBeforeQueueing interface), the light-touch down event dispatched by the input dispatcher, and perform long-press gesture detection on the light-touch down event. If the user lightly touches the pressure-sensitive key for particular duration (for example, 300 ms) and then lifts up, the phone window manager may not obtain a light-touch up event within particular duration (for example, 300 ms) of detecting that the light-touch down event is obtained, then determine that a light-press gesture is detected, and send a light-press gesture notification to the System UI after detecting the light-press gesture. The System UI displays a dynamic focus effect in a status bar according to the light-press gesture notification. Using an example in which the pressure-sensitive key is a left pressure-sensitive key, the System UI may display a dynamic focus effect in a left part of a status bar, to indicate that the user may drop down the notification center by using the pressure-sensitive key.

The input dispatcher may further synchronize information such as a focus application to the slide manager, and the slide manager may recognize, according to the focus application, that a current application scenario is a desktop scenario, and update a corresponding slide policy (for example, a single-finger slide-down policy) according to the desktop scenario. After recognizing the long-press gesture or obtaining the light-touch up event, the phone window manager sends a light-touch completion notification to the slide manager. After receiving the light-touch completion notification, the slide manager may update the slide response state to an enabled state. In addition, the slide manager may further update the mapping parameter according to slide management information such as a slide policy. Then, when the pressure-sensitive key receives a slide-up operation, a corresponding hardware interrupt is transmitted to the pressure-sensitive device driver of the kernel layer. The pressure-sensitive device driver reports slide data of the slide-up operation to the event center, and the event center reports the slide data to the slide touch input mapping module. The slide touch input mapping module may preprocess the slide data, then process the preprocessed slide data according to the mapping parameter and the screen matrix, generate an event parameter, and generate a slide event on the screen according to the event parameter. Then, the slide event on the screen is reported to the input dispatcher, the input dispatcher reports the slide event to the System UI, and the System UI drops down and displays the notification center according to the slide event.

An execution entity of the operation response method provided in this embodiment of this application may be the foregoing terminal device, or may be functional modules and/or functional entities in the terminal device that are capable of implementing the video processing method. In addition, the solutions of this application can be implemented in a hardware and/or software manner. Details can be determined based on an actual use requirement, which is not limited in this embodiment of this application. The following exemplarily describes the video processing method provided in this embodiment of this application by an example of a terminal device.

Next, with reference to FIG. 18, a process of dropping down the notification center by using a pressure-sensitive key is described schematically.

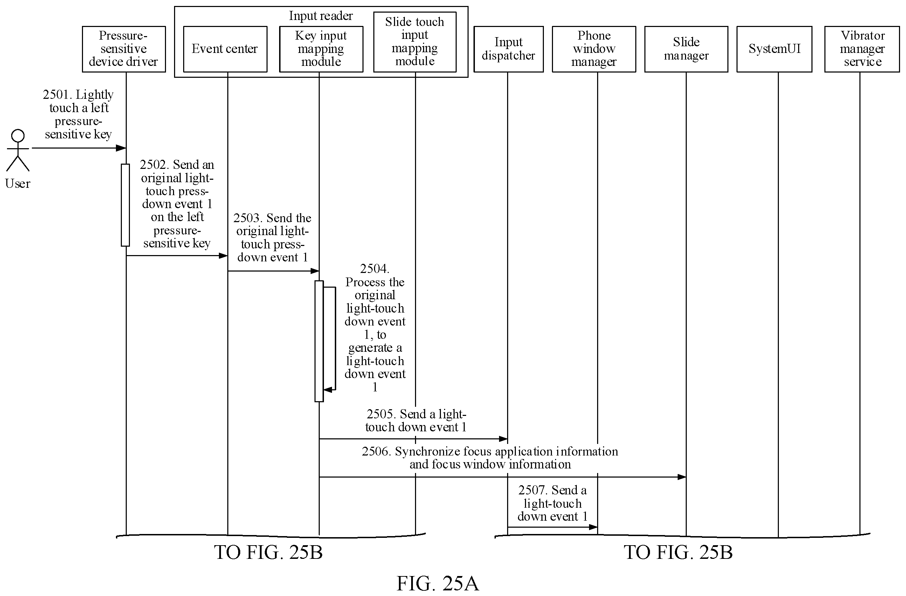

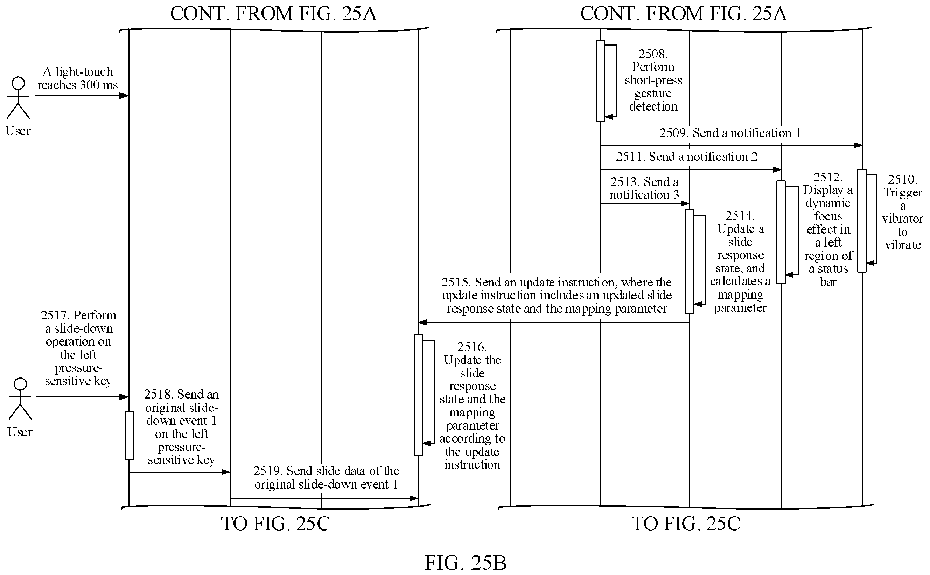

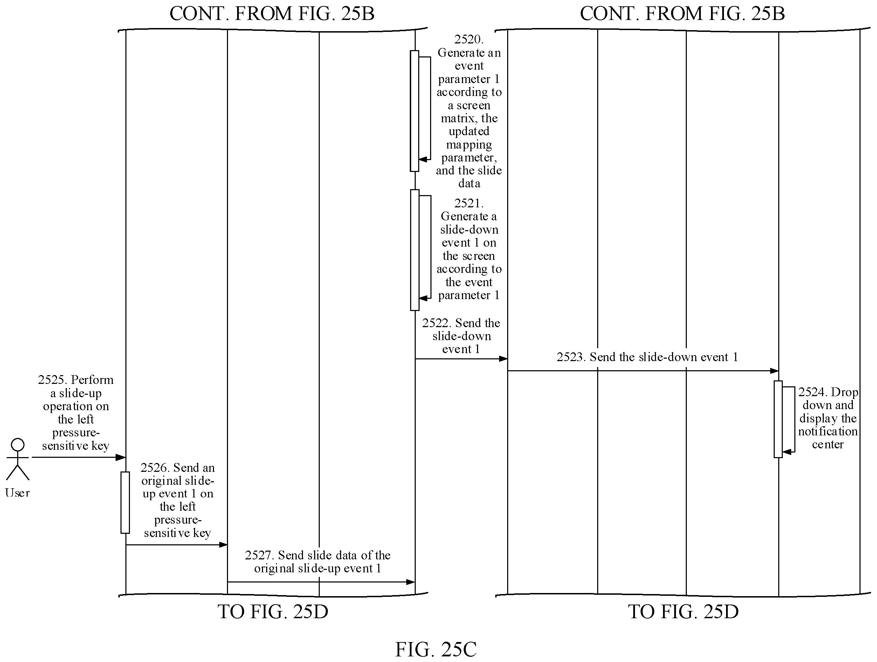

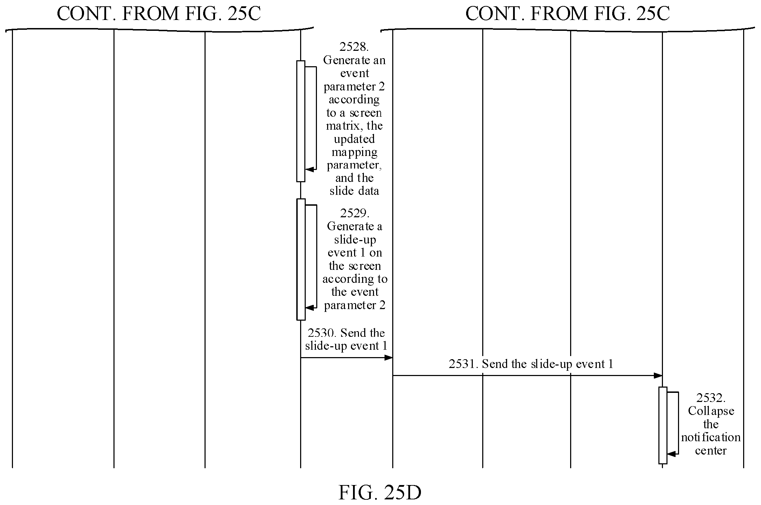

FIG. 25A, FIG. 25B, FIG. 25C, and FIG. 25D are schematic flowcharts of dropping down and displaying a notification center according to a touch operation on a pressure-sensitive key according to an embodiment of this application. As an example, an example in which the terminal device includes a left pressure-sensitive key, and a user drops down the notification center by performing a light long-press + slide-down operation on the left pressure-sensitive key in a desktop scenario is used for description.

Step 2501: When the terminal device displays a desktop, the user lightly presses a left pressure-sensitive key of the terminal device.

It should be understood that this embodiment of this application is described by using only the desktop scenario as an example. However, in another embodiment, the terminal device may alternatively drop down or collapse the notification center according to the touch operation on the pressure-sensitive key when displaying another particular interface. This is not limited in this embodiment of this application.

Step 2502: A pressure-sensitive device driver sends an original light-touch down event 1 on the left pressure-sensitive key to an event center of an input reader.

After the left pressure-sensitive key receives a light-press operation, a corresponding hardware interrupt is sent to the pressure-sensitive device driver of the kernel layer. The pressure-sensitive device driver may process the light-press operation into the original light-touch down event 1, and then send the original light-touch down event 1 to the event center of the input reader.

In an embodiment, for a touch operation on a pressure-sensitive key, the pressure-sensitive device driver may process the touch operation into a corresponding original touch event. The original touch event may include an identifier of the pressure-sensitive key, to indicate that the original touch event is an original touch event on the pressure-sensitive key. For example, the identifier of the pressure-sensitive key may be a key value (key code) corresponding to the pressure-sensitive key. In addition, the original touch event may further include information such as touch coordinates and an operation time stamp. This is not limited in this embodiment of this application.

As an example, for the original light-touch down event 1 on the left pressure-sensitive key, the original light-touch down event 1 may include an identifier of the left pressure-sensitive key, to indicate that the original light-touch down event 1 is an original light-touch down event on the left pressure-sensitive key. For example, the identifier of the left pressure-sensitive key may be a key value corresponding to the left pressure-sensitive key. For example, for ease of recognition, key values of the left pressure-sensitive key and a right pressure-sensitive key may be VOLUME_TICKL and POWER_TICKLE respectively.

In an embodiment, for a press operation on a pressure-sensitive key, the pressure-sensitive device driver may further first determine a type of the press operation according to a press pressure of the press operation, and then process the press operation into original press events of different types. For example, a type of the press operation may include a light-tap, a light-press, a heavy-press, and the like. This is not limited in this embodiment of this application.

In an embodiment, the pressure-sensitive device driver may report the original light-touch down event 1 to the event center. Alternatively, the pressure-sensitive device driver may store the original light-touch down event 1, and then the event center reads the original light-touch down event 1 from the pressure-sensitive device driver.

Step 2503: The event center of the input reader sends the original light-touch down event 1 to a key input mapping module.

After receiving the original light-touch down event 1, the event center may send the original light-touch down event 1 to the key input mapping module, and the key input mapping module processes the original light-touch down event.

The key input mapping module is configured to process an original touch event such as an original light-touch down event or an original light-touch up event. For any original touch event, the event center may send the original touch event to the key input mapping module for processing.

Step 2504: The key input mapping module processes the original light-touch down event 1, to generate a light-touch down event 1.

The light-touch down event 1 is a standard light-touch down event that can be recognized and processed by an input system. The key input mapping module may process the original light-touch down event, to convert the original light-touch down event into a standard light-touch down event.

In an embodiment, the key input mapping module may further process another original touch event such as the original light-touch-up event, to convert the another original touch event into a corresponding standard touch event. For example, if an original light-touch-up event sent by the event center is received, the original light-touch-up event may be further processed, to generate a light-touch-up event.

Step 2505: The key input mapping module sends the light-touch down event 1 to an input dispatcher.

Step 2506: The input dispatcher synchronizes focus application information and focus window information to a slide manager.

The input dispatcher may obtain information such as the focus application information, the focus window information, and a window level, and synchronize the information to the slide manager.

In an embodiment, the input dispatcher may synchronize, when any of the foregoing information changes, changed information to the slide manager.

In an embodiment, the input dispatcher may obtain the foregoing information by using a related interface of SurfaceFlinger.

Step 2507: The input dispatcher sends the light-touch down event 1 to a phone window manager.

In an embodiment, the input dispatcher may dispatch the light-touch down event 1. The phone window manager may obtain, by using an event obtaining interface, the light-touch down event 1 dispatched by the input dispatcher. The event obtaining interface is configured to obtain a light-touch event reported by an event dispatcher, and may be an interceptKeyBeforeQueueing (interceptKeyBeforeQueueing) interface or the like.

In an embodiment, the input dispatcher may dispatch the light-touch down event 1 when it is determined, according to the focus application information, that the current focus application is a particular application such as a desktop application; and does not dispatch the light-touch down event when it is determined that the current focus application is not the particular application.

Step 2508: The phone window manager performs long-press gesture detection according to the light-touch down event 1.

A long-press gesture is a light-press gesture whose light-touch duration is greater than or equal to a first duration threshold.

The phone window manager may determine light-touch duration corresponding to the light-touch down event 1. If the light-touch duration reaches the first duration threshold (for example, 300 ms), it is determined that a long-press gesture is detected. If the light-touch duration does not reach the first duration threshold, it is determined that no long-press gesture is detected.

In an embodiment, the phone window manager may determine whether the light-touch up event corresponding to the light-touch down event 1 is received within the first duration threshold after the light-touch down event 1 is received. If the light-touch up event is received, indicating that the light-touch duration does not reach the first duration threshold, it may be determined that no long-press gesture is detected. If the light-touch up event is not received, indicating that the light-touch duration reaches the first duration threshold, it may be determined that a long-press gesture is detected.

Step 2509: After detecting a long-press gesture, the phone window manager sends a notification 1 to a vibration management server.

The notification 1 is used for indicating that a long-press gesture is detected.

In addition, the notification 1 may further instruct the vibration management server to trigger vibration.

Step 2510: The vibration management server triggers, according to the notification 1, a vibrator to vibrate.

In an embodiment, the vibration management server triggers the vibrator to vibrate in different vibration forms in different situations. For example, the vibrator may be triggered according to different notifications to vibrate in different vibration forms.

Step 2511: After detecting a long-press gesture, the phone window manager sends a notification 2 to a System UI.

The notification 2 is used for indicating that a long-press gesture is detected.

In addition, the notification 2 may further indicate that a long-press gesture is detected on the left pressure-sensitive key, so that the System UI makes different responses according to long-press gestures on different pressure-sensitive keys.

Step 2512: The System UI displays a dynamic focus effect in a left region of a status bar in response to the notification 2.

By displaying the dynamic focus effect in the left region of the status bar, the user may be instructed to drop down the notification center by using a pressure-sensitive key.

Step 2513: After detecting a long-press gesture, the phone window manager sends a notification 3 to the slide manager.

The notification 3 may indicate that the light-touch duration reaches the first duration threshold, or indicate that a light-touch is completed.

In an embodiment, when the light-touch duration reaches the first duration threshold, the phone window manager may send the notification 3 to the slide manager at the first duration threshold after receiving after the light-touch down event 1, or may send the notification 3 to the slide manager after receiving the light-touch up event corresponding to the light-touch down event 1. This is not limited in this embodiment of this application.

Step 2514: The slide manager updates a slide response state according to the notification 3, and calculates a mapping parameter.

The slide response state is used for indicating whether the terminal device listens to and processes a slide operation on the pressure-sensitive key, for example, may indicate whether the slide touch input mapping module processes an original slide event or slide data.

The slide manager maintains the slide response state. After the notification 3 is received, the slide response state may be switched to an enabled state. For example, before the notification 3 is received, the slide response state maintained by the slide manager may be a disabled state. After the notification 3 is received, the slide response state may be switched from the disabled state to the enabled state, to respond to a subsequent slide operation.

In an embodiment, the slide manager may update the slide response state to the enabled state when the device state satisfies a preset condition. The preset condition includes that the notification 3 is received, that the focus window is a notification center window or a control center window, or the like. In addition, the phone window manager may update the slide response state to the disabled state when the device state does not satisfy the preset condition, to reduce a probability of accidental touch of the user.

The mapping parameter is a related parameter used for mapping a slide event on the pressure-sensitive key to a slide event on a screen, and may include, for example, a start point, and may further include at least one of the following parameters: a slide finger requirement (whether to be a single finger or a plurality of types), a slide direction, a slide gesture, a slide distance mapping ratio, and the like.

In an embodiment, for a mapping parameter corresponding to a desktop scenario, a start point in the mapping parameter is mapped to a slide start point on a screen. The start point may include a slide-up start point and a slide-down start point. The slide-up start point may be located at the top of the screen or be at a position away from the top of the screen by a preset distance, to map a slide-down operation on a pressure-sensitive key to an operation of sliding down from where is close to the top of the screen. In addition, for a left pressure-sensitive key, the slide-up start point may be further located on the left side of the screen, to map a slide-down operation on the pressure-sensitive key to an operation of sliding down from the top left of the screen. A slide-down start point may be at a lower position on the screen, for example, a position on a lower half part or on a center line of upper and lower parts of the screen, to map a slide-down operation on the pressure-sensitive key to an operation of sliding up from a lower position on the screen. In addition, for a left pressure-sensitive key, the slide-down start point may be further located on the left side of the screen, to map a slide-up operation on the pressure-sensitive key to an operation of sliding up on the left side of the screen.

Step 2515: The phone window manager sends an update instruction to a slide touch input mapping module of the input reader, where the update instruction includes an updated slide response state and the mapping parameter.

Step 2516: The slide touch input mapping module updates the slide response state and the mapping parameter according to the update instruction.

It should be understood that in this embodiment of this application, only an example in which the slide response state and the mapping parameter of the slide touch input mapping module are updated is used for description. However, in another embodiment, alternatively, only the mapping parameter may be updated, and the slide response state is not updated. This is not limited in this embodiment of this application.

Step 2517: The user performs a slide-down operation on the left pressure-sensitive key.

Step 2518: The pressure-sensitive device driver sends an original slide-down event 1 on the left pressure-sensitive key to the event center of the input reader.

In an embodiment, the pressure-sensitive device driver may alternatively send slide data of the original slide-down event 1 on the left pressure-sensitive key to the event center.

Step 2519: The event center of the input reader sends slide data of the original slide-down event 1 to the slide touch input mapping module.

Step 2520: The slide touch input mapping module generates an event parameter 1 according to a screen matrix, the updated mapping parameter, and the slide data.

The screen matrix is used to indicate a screen direction and a screen width and height. The screen direction may include a landscape direction, a portrait direction, and the like. The screen width and height is used for indicating a pixel size of a screen.

The slide touch input mapping module may process the slide data according to the screen matrix and the updated mapping parameter, to map the slide data to the event parameter 1 of the slide-down event on the screen.

The event parameter 1 may include a slide start point on the screen. The start point may be at the top of the screen or be at a position away from the top of the screen by a preset distance, to map a slide-down operation on a pressure-sensitive key to an operation of sliding down from where is close to the top of the screen. In addition, for the slide-down operation on the left pressure-sensitive key, the start point may be further located on the left side of the screen, to map a slide-down operation on the pressure-sensitive key to an operation of sliding down from the top left of the screen. For example, the start point may be located at 1/3 of the width of the screen (that is, a distance to the left side of the screen is 1/3 of a distance to the right side of the screen), or located at 1/4 of the width of the screen (that is, a distance to the left side of the screen is 1/3 of a distance to the right side of the screen).

In an example, screen coordinates of the start point in a screen coordinate system include an X-axis coordinate and a Y-axis coordinate, the X-axis coordinate is a position at 1/3 of the width of the screen, and the Y-axis coordinate is 20. The screen coordinate system is a coordinate system in which a vertex at an upper left corner of the screen is used as an origin, a width direction of the screen is an X axis, and a height direction of the screen is a Y axis coordinate.

In an embodiment, before generating the event parameter 1 according to the screen matrix, the updated mapping parameter, and the slide data, the slide touch input mapping module may further preprocess the slide data first, and then generate the event parameter 1 according to the screen matrix, the updated mapping parameter, and the preprocessed slide data.

In an example, the preprocessing may include verifying the slide data, to check whether the slide data is correct, whether the slide data is accidental touch data, and the like. The operation of generating the event parameter according to the screen matrix, the updated mapping parameter, and the slide data is performed if the verification succeeds. No subsequent operation is performed if the verification fails.

Step 2521: The slide touch input mapping module generates a slide-down event 1 on the screen according to the event parameter 1.

The slide touch input mapping module may encapsulate the event parameter into a slide-down event on the screen.

Step 2522: The slide touch input mapping module sends the slide-down event 1 to the input dispatcher.

Step 2523: The input dispatcher sends the slide-down event 1 to the System UI.

Step 2524: the System UI drops down and displays a notification center in response to the slide-down event 1.

Step 2525: The user performs a slide-up operation on the left pressure-sensitive key.

Step 2526: The pressure-sensitive device driver sends an original slide-up event 1 on the left pressure-sensitive key to the event center of the input reader.

In an embodiment, the pressure-sensitive device driver may alternatively send slide data of the original slide-up event 1 on the left pressure-sensitive key to the event center.

Step 2527: The event center of the input reader sends slide data of the original slide-up event 1 to the slide touch input mapping module.

Step 2528: The slide touch input mapping module generates an event parameter 2 according to a screen matrix, the updated mapping parameter, and the slide data.

The slide touch input mapping module may process the slide data according to the screen matrix and the updated mapping parameter, to map the slide data to the event parameter 2 of the slide-up event on the screen.

The event parameter 2 may include a slide start point on the screen. The start point may be at a lower position on the screen, for example, a position on a lower half part or on a center line of upper and lower parts of the screen, to map a slide-down operation on the pressure-sensitive key to an operation of sliding up from a lower position on the screen. In addition, for the slide-up operation on the left pressure-sensitive key, the start point may be further located on the left side of the screen, to map a slide-up operation on the pressure-sensitive key to an operation of sliding up on the left side of the screen. For example, the start point may be located at 1/3 of the width of the screen (that is, a distance to the left side of the screen is 1/3 of a distance to the right side of the screen), or located at 1/4 of the width of the screen (that is, a distance to the left side of the screen is 1/3 of a distance to the right side of the screen).

In an example, screen coordinates of the start point in a screen coordinate system include an X-axis coordinate and a Y-axis coordinate, the X-axis coordinate is a position at 1/3 of the width of the screen, and the Y-axis coordinate is a position of a center line of an upper part and a lower part of the screen. The screen coordinate system is a coordinate system in which a vertex at an upper left corner of the screen is used as an origin, a width direction of the screen is an X axis, and a height direction of the screen is a Y axis coordinate.

In an embodiment, before generating the event parameter according to the screen matrix, the updated mapping parameter, and the slide data, the slide touch input mapping module may further preprocess the slide data first, and then generate the event parameter according to the screen matrix, the updated mapping parameter, and the preprocessed slide data.

In an example, the preprocessing may include verifying the slide data, to check whether the slide data is correct, whether the slide data is accidental touch data, and the like. The operation of generating the event parameter according to the screen matrix, the updated mapping parameter, and the slide data is performed if the verification succeeds. No subsequent operation is performed if the verification fails.

Step 2529: The slide touch input mapping module generates a slide-up event 1 on the screen according to the event parameter 2.

Step 2530: The slide touch input mapping module sends the slide-up event 1 to the input dispatcher.

Step 2531: The input dispatcher sends the slide-up event 1 to the System UI.

Step 2532: the System UI collapses the notification center in response to the slide-up event 1.

In response to the slide-up event 1, the System UI may directly cancel displaying of the notification center, or may gradually move the notification center out of the top of the screen, to achieve an effect of gradually collapsing. This is not limited in this embodiment of this application.

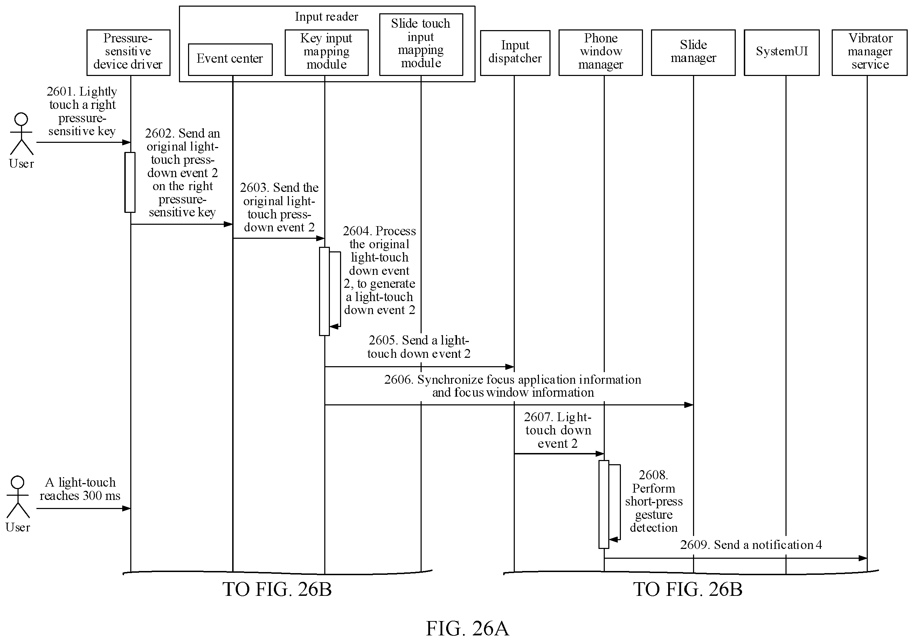

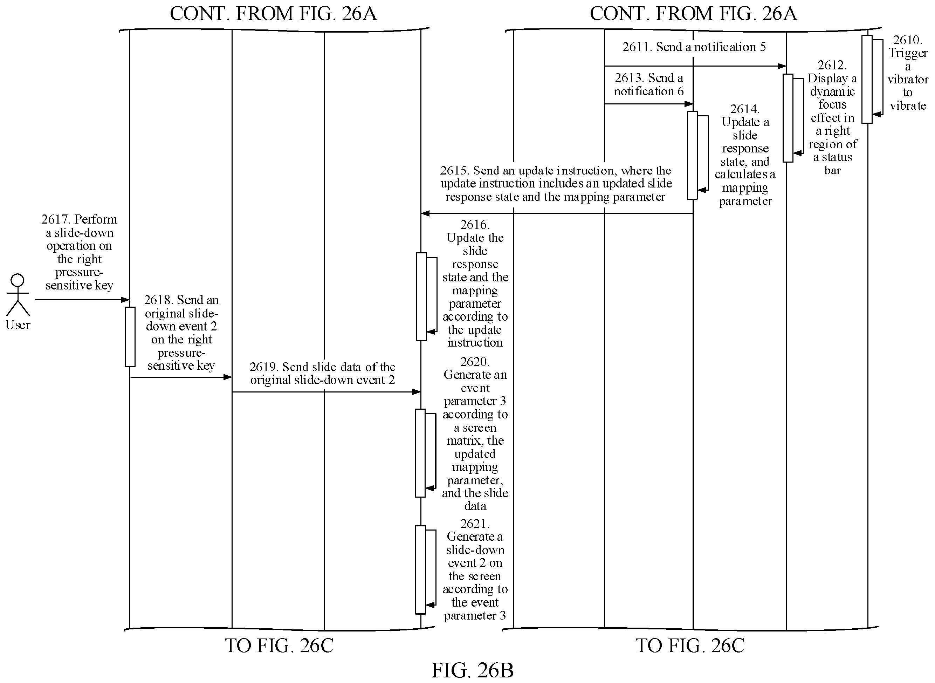

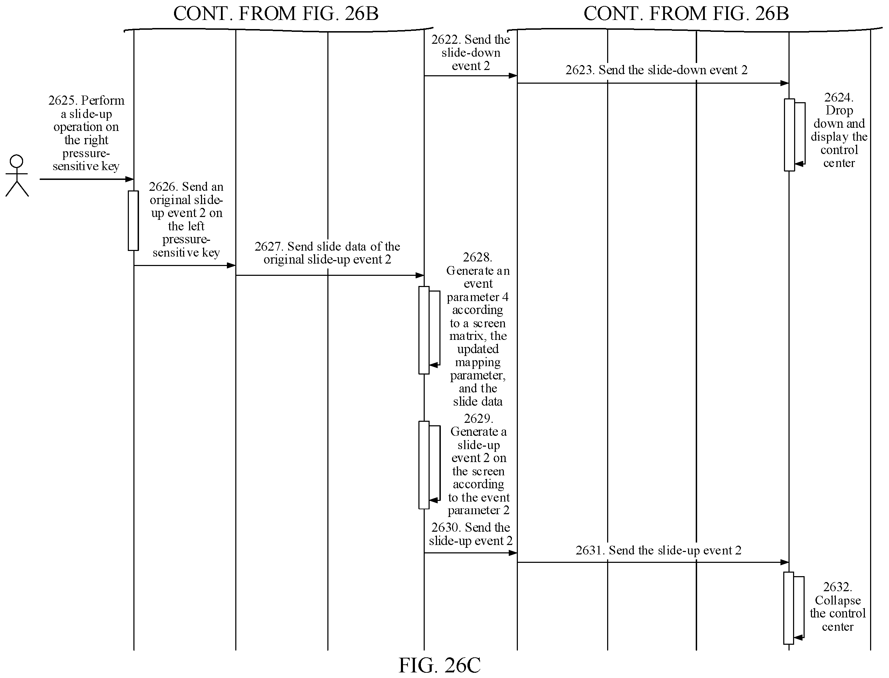

FIG. 26A, FIG. 26B, and FIG. 26C are schematic flowcharts of dropping down and displaying a control center according to a touch operation on a pressure-sensitive key according to an embodiment of this application. As an example, an example in which the terminal device includes a right pressure-sensitive key, and a user drops down the control center by performing a light long-press + slide-down operation on the right pressure-sensitive key in a desktop scenario is used for description.

Step 2601: When the terminal device displays a desktop, the user lightly presses a right pressure-sensitive key of the terminal device.

It should be understood that this embodiment of this application is described by using only the desktop scenario as an example. However, in another embodiment, the terminal device may alternatively drop down or collapse the control center according to the touch operation on the pressure-sensitive key when displaying another interface. This is not limited in this embodiment of this application.

Step 2602: A pressure-sensitive device driver sends an original light-touch down event 2 on the right pressure-sensitive key to an event center of an input reader.

After the right pressure-sensitive key receives a light-press operation, a corresponding hardware interrupt is sent to the pressure-sensitive device driver of the kernel layer. The pressure-sensitive device driver may process the light-press operation into the original light-touch down event 2, and then send the original light-touch down event 2 to the event center of the input reader.

In an embodiment, for a touch operation on a pressure-sensitive key, the pressure-sensitive device driver may process the touch operation into a corresponding original touch event. The original touch event may include an identifier of the pressure-sensitive key, to indicate that the original touch event is an original touch event on the pressure-sensitive key. For example, the identifier of the pressure-sensitive key may be a key value (key code) corresponding to the pressure-sensitive key. In addition, the original touch event may further include information such as touch coordinates and an operation time stamp. This is not limited in this embodiment of this application.

As an example, for the original light-touch down event 2 on the right pressure-sensitive key, the original light-touch down event 2 may include an identifier of the right pressure-sensitive key, to indicate that the original light-touch event 2 is an original light-touch down event on the right pressure-sensitive key. For example, the identifier of the right pressure-sensitive key may be a key value corresponding to the right pressure-sensitive key. For example, for ease of recognition, key values of the left pressure-sensitive key and a right pressure-sensitive key may be VOLUME_TICKL and POWER_TICKLE respectively.

In an embodiment, for a press operation on a pressure-sensitive key, the pressure-sensitive device driver may further first determine a type of the press operation according to a press pressure of the press operation, and then process the press operation into original press events of different types. For example, a type of the press operation may include a light-tap, a light-press, a heavy-press, and the like. This is not limited in this embodiment of this application.

In an embodiment, the pressure-sensitive device driver may report the original light-touch down event 2 to the event center. Alternatively, the pressure-sensitive device driver may store the original light-touch down event 2, and then the event center reads the original light-touch down event 2 from the pressure-sensitive device driver.

Step 2603: The event center of the input reader sends the original light-touch down event 2 to a key input mapping module.

After receiving the original light-touch down event 2, the event center may send the original light-touch down event 2 to the key input mapping module, and the key input mapping module processes the original light-touch down event.

The key input mapping module is configured to process an original touch event such as an original light-touch down event or an original light-touch up event. For any original touch event, the event center may send the original touch event to the key input mapping module for processing.

Step 2604: The key input mapping module processes the original light-touch down event 2, to generate a light-touch down event 2.

The light-touch down event 2 is a standard light-touch down event that can be recognized and processed by an input system. The key input mapping module may process the original light-touch down event, to convert the original light-touch down event into a standard light-touch down event.

In an embodiment, the key input mapping module may further process another original touch event such as the original light-touch-up event, to convert the another original touch event into a corresponding standard touch event. For example, if an original light-touch-up event sent by the event center is received, the original light-touch-up event may be further processed, to generate a light-touch-up event.

Step 2605: The key input mapping module sends the light-touch down event 2 to an input dispatcher.

Step 2606: The input dispatcher synchronizes focus application information and focus window information to a slide manager.

The input dispatcher may obtain information such as the focus application information, the focus window information, and a window level, and synchronize the information to the slide manager.

In an embodiment, the input dispatcher may synchronize, when any of the foregoing information changes, changed information to the slide manager.

In an embodiment, the input dispatcher may obtain the foregoing information by using a related interface of SurfaceFlinger.

Step 2607: The input dispatcher sends the light-touch down event 2 to a phone window manager.

In an embodiment, the input dispatcher may dispatch the light-touch down event 2. The phone window manager may obtain, by using an event obtaining interface, the light-touch down event 2 dispatched by the input dispatcher. The event obtaining interface is configured to obtain a light-touch event reported by an event dispatcher, and may be an interceptKeyBeforeQueueing interface or the like.

In an embodiment, the input dispatcher may dispatch the light-touch down event 2 when it is determined, according to the focus application information, that the current focus application is a particular application such as a desktop application; and does not dispatch the light-touch down event when it is determined that the current focus application is not the particular application.

Step 2608: The phone window manager performs long-press gesture detection according to the light-touch down event 2.

A long-press gesture is a light-press gesture whose light-touch duration (is greater than or equal to) reaches a first duration threshold.

The phone window manager may determine light-touch duration corresponding to the light-touch down event 2. If the light-touch duration reaches the first duration threshold (for example, 300 ms), it is determined that a long-press gesture is detected. If the light-touch duration does not reach the first duration threshold, it is determined that no long-press gesture is detected.

In an embodiment, the phone window manager may determine whether the light-touch up event corresponding to the light-touch down event 2 is received within the first duration threshold after the light-touch down event 2 is received. If the light-touch up event is received, indicating that the light-touch duration does not reach the first duration threshold, it may be determined that no long-press gesture is detected. If the light-touch up event is not received, indicating that the light-touch duration reaches the first duration threshold, it may be determined that a long-press gesture is detected.

Step 2609: When detecting a long-press gesture, the phone window manager sends a notification 4 to a vibration management server.

The notification 4 is used for indicating that a long-press gesture is detected.

In addition, the notification 4 may further instruct the vibration management server to trigger vibration.

Step 2610: The vibration management server triggers, according to the notification 4, a vibrator to vibrate.

In an embodiment, the vibration management server triggers the vibrator to vibrate in different vibration forms in different situations. For example, the vibrator may be triggered according to different notifications to vibrate in different vibration forms.

Step 2611: When detecting a long-press gesture, the phone window manager sends a notification 5 to a System UI.

The notification 5 is used for indicating that a long-press gesture is detected.

In addition, the notification 5 may further indicate that a long-press gesture is detected on the right pressure-sensitive key, so that the System UI makes different responses according to long-press gestures on different pressure-sensitive keys.

Step 2612: The System UI displays a dynamic focus effect in a left part of a status bar in response to the notification 5.

Step 2613: The phone window manager sends a notification 6 to the slide manager when light-touch duration reaches the first duration threshold.

The notification 6 may indicate that the light-touch duration reaches the first duration threshold, or indicate that a light-touch is completed.

In an embodiment, when the light-touch duration reaches the first duration threshold, the phone window manager may send the notification 6 to the slide manager at the first duration threshold after receiving after the light-touch down event 2, or may send the notification 6 to the slide manager after receiving the light-touch up event corresponding to the light-touch down event 2. This is not limited in this embodiment of this application.

Step 2614: The phone window manager updates a slide response state to an enabled state according to the notification 6, and calculates a mapping parameter.

The slide response state is used for indicating whether the terminal device listens to and processes a slide operation on the pressure-sensitive key, for example, may indicate whether the slide touch input mapping module processes an original slide event or slide data.

The slide manager maintains the slide response state. After the notification 3 is received, the slide response state may be switched to an enabled state. For example, before the notification 3 is received, the slide response state maintained by the slide manager may be a disabled state. After the notification 3 is received, the slide response state may be switched from the disabled state to the enabled state, to respond to a subsequent slide operation.

In an embodiment, the slide manager may update the slide response state to the enabled state when the device state satisfies a preset condition. The preset condition includes that the notification 3 is received, that the focus window is a notification center window or a control center window, or the like. In addition, the phone window manager may update the slide response state to the disabled state when the device state does not satisfy the preset condition, to reduce a probability of accidental touch of the user.

The mapping parameter is a related parameter used for mapping a slide event on the pressure-sensitive key to a slide event on a screen, and may include, for example, a start point, and may further include at least one of the following parameters: a slide finger requirement (whether to be a single finger or a plurality of fingers), a slide direction, a slide gesture, a slide distance mapping ratio, and the like.

In an embodiment, for a mapping parameter corresponding to a desktop scenario, a start point in the mapping parameter is mapped to a slide start point on a screen. The start point may include a slide-up start point and a slide-down start point. The slide-up start point may be located at the top of the screen or be at a position away from the top of the screen by a preset distance, to map a slide-down operation on a pressure-sensitive key to an operation of sliding down from where is close to the top of the screen. In addition, for a left pressure-sensitive key, the slide-up start point may be further located on the left side of the screen, to map a slide-down operation on the pressure-sensitive key to an operation of sliding down from the top left of the screen. A slide-down start point may be at a lower position on the screen, for example, a position on a lower half part or on a center line of upper and lower parts of the screen, to map a slide-down operation on the pressure-sensitive key to an operation of sliding up from a lower position on the screen. In addition, for a left pressure-sensitive key, the slide-down start point may be further located on the left side of the screen, to map a slide-up operation on the pressure-sensitive key to an operation of sliding up on the left side of the screen.

Step 2615: The phone window manager sends an update instruction to a slide touch input mapping module of the input reader, where the update instruction includes an updated slide response state and the mapping parameter.

Step 2616: The slide touch input mapping module updates the slide response state and the mapping parameter according to the update instruction.

It should be understood that in this embodiment of this application, only an example in which the slide response state and the mapping parameter of the slide touch input mapping module are updated is used for description. However, in another embodiment, alternatively, only the mapping parameter may be updated, and the slide response state is not updated. This is not limited in this embodiment of this application.

Step 2617: The user performs a slide-down operation on the right pressure-sensitive key.

Step 2618: The pressure-sensitive device driver sends an original slide-down event 2 on the right pressure-sensitive key to the event center of the input reader.

In an embodiment, the pressure-sensitive device driver may alternatively send slide data of the original slide-down event 2 on the right pressure-sensitive key to the event center.

Step 2619: The event center of the input reader sends slide data of the original slide-down event 2 to the slide touch input mapping module.

Step 2620: The slide touch input mapping module generates an event parameter according to a screen matrix, the updated mapping parameter, and the slide data.

The screen matrix is used to indicate a screen direction and a screen width and height. The screen direction may include a landscape direction, a portrait direction, and the like. The screen width and height is used for indicating a pixel size of a screen.

The slide touch input mapping module may process the slide data according to the screen matrix and the updated mapping parameter, to map the slide data to the event parameter 3 of the slide-down event on the screen.

The event parameter 3 may include a slide start point on the screen. The start point may be at the top of the screen or be at a position away from the top of the screen by a preset distance, to map a slide-down operation on a pressure-sensitive key to an operation of sliding down from where is close to the top of the screen. In addition, for the slide-down operation on the left pressure-sensitive key, the start point may be further located on the left side of the screen, to map a slide-down operation on the pressure-sensitive key to an operation of sliding down from the top left of the screen. For example, the start point may be located at 1/3 of the width of the screen (that is, a distance to the left side of the screen is 1/3 of a distance to the right side of the screen), or located at 1/4 of the width of the screen (that is, a distance to the left side of the screen is 1/3 of a distance to the right side of the screen).

In an example, screen coordinates of the start point in a screen coordinate system include an X-axis coordinate and a Y-axis coordinate, the X-axis coordinate is a position at 1/3 of the width of the screen, and the Y-axis coordinate is 20. The screen coordinate system is a coordinate system in which a vertex at an upper left corner of the screen is used as an origin, a width direction of the screen is an X axis, and a height direction of the screen is a Y axis coordinate.

In an embodiment, before generating the event parameter 3 according to the screen matrix, the updated mapping parameter, and the slide data, the slide touch input mapping module may further preprocess the slide data first, and then generate the event parameter 3 according to the screen matrix, the updated mapping parameter, and the preprocessed slide data.

In an example, the preprocessing may verify the slide data, to check whether the slide data is correct, whether the slide data is accidental touch data, and the like. The operation of generating the event parameter according to the screen matrix, the updated mapping parameter, and the slide data is performed if the verification succeeds. No subsequent operation is performed if the verification fails.

Step 2621: The slide touch input mapping module generates a slide-up event 2 on the screen according to the event parameter 3.

The slide touch input mapping module may encapsulate the event parameter into a slide-down event on the screen.

Step 2622: The slide touch input mapping module reports the slide-up event to the input dispatcher.

Step 2623: The input dispatcher sends the slide-up event to the System UI.

Step 2624: The System UI drops down and displays the control center in response to the slide-up event.

Step 2625: The user performs a slide-up operation on the left pressure-sensitive key.

Step 2626: The pressure-sensitive device driver sends an original slide-up event 2 on the right pressure-sensitive key to the event center of the input reader.

In an embodiment, the pressure-sensitive device driver may alternatively send slide data of the original slide-up event 2 on the right pressure-sensitive key to the event center.

Step 2627: The event center of the input reader sends slide data of the original slide-up event 2 to the slide touch input mapping module.

Step 2528: The slide touch input mapping module generates an event parameter 4 according to a screen matrix, the updated mapping parameter, and the slide data.

The slide touch input mapping module may process the slide data according to the screen matrix and the updated mapping parameter, to map the slide data to the event parameter 4 of the slide-up event on the screen.

The event parameter 4 may include a slide start point on the screen. The start point may be at a lower position on the screen, for example, a position on a lower half part or on a center line of upper and lower parts of the screen, to map a slide-down operation on the pressure-sensitive key to an operation of sliding up from a lower position on the screen. In addition, for the slide-up operation on the right pressure-sensitive key, the start point may be further located on the right side of the screen, to map a slide-up operation on the pressure-sensitive key to an operation of sliding up on the right side of the screen. For example, the start point may be located at 1/3 of the width of the screen (that is, a distance to the right side of the screen is 1/3 of a distance to the right side of the screen), or located at 1/4 of the width of the screen (that is, a distance to the right side of the screen is 1/3 of a distance to the right side of the screen).

In an example, screen coordinates of the start point in a screen coordinate system include an X-axis coordinate and a Y-axis coordinate, the X-axis coordinate is a position at 1/3 of the width of the screen, and the Y-axis coordinate is a position of a center line of an upper part and a lower part of the screen. The screen coordinate system is a coordinate system in which a vertex at an upper left corner of the screen is used as an origin, a width direction of the screen is an X axis, and a height direction of the screen is a Y axis coordinate.

In an embodiment, before generating the event parameter according to the screen matrix, the updated mapping parameter, and the slide data, the slide touch input mapping module may further preprocess the slide data first, and then generate the event parameter according to the screen matrix, the updated mapping parameter, and the preprocessed slide data.

In an example, the preprocessing may include verifying the slide data, to check whether the slide data is correct, whether the slide data is accidental touch data, and the like. The operation of generating the event parameter according to the screen matrix, the updated mapping parameter, and the slide data is performed if the verification succeeds. No subsequent operation is performed if the verification fails.

Step 2629: The slide touch input mapping module generates a slide-up event 2 on the screen according to the event parameter 4.

Step 2630: The slide touch input mapping module sends the slide-up event 2 to the input dispatcher.

Step 2631: The input dispatcher sends the slide-up event 2 to the System UI.

Step 2632: the System UI collapses the control center in response to the slide-up event 2.

In response to the slide-up event 2, the System UI may directly cancel displaying of the control center, or may gradually move the control center out of the top of the screen, to achieve an effect of gradually collapsing. This is not limited in this embodiment of this application.

This application further provides a chip. The chip is coupled to a memory. The chip is configured to read and execute a computer program or instructions stored in the memory, to perform the method in the foregoing embodiments.

This application further provides an electronic device. The electronic device includes a chip. The chip is configured to read and execute a computer program or instructions stored in a memory, so that the method in the foregoing embodiments is performed.

An embodiment further provides a computer-readable storage medium. The computer-readable storage medium stores computer instructions. When the computer instructions are run on an electronic device, the electronic device is enabled to perform the foregoing related method steps to implement the service processing method in the foregoing embodiments.

An embodiment further provides a computer program product. The computer-readable storage medium stores program code. When the computer program product runs on a computer, the computer is enabled to perform the foregoing related steps to implement the service processing method in the foregoing embodiments.

In addition, an embodiment of this application further provides an apparatus. The apparatus may be specifically a chip, a component, or a module. The apparatus may include a processor and a memory that are connected. The memory is configured to store computer executable instructions. When the apparatus runs, the processor may execute the computer executable instructions stored in the memory, so that the chip performs the service processing method in the foregoing method embodiments.

The electronic device, the computer-readable storage medium, the computer program product, or the chip provided in the embodiments is configured to perform the corresponding method provided above. Therefore, for beneficial effects that can be achieved by the electronic device, the computer-readable storage medium, the computer program product, or the chip, refer to the beneficial effects of the corresponding method provided above. Details are not described herein again.

Embodiments of this application do not specifically limit a specific structure of an execution entity of the methods provided in embodiments of this application, as long as the program in which the codes of the methods provided in embodiments of this application are recorded can be executed to perform video processing based on embodiments of this application. For example, the execution body of the method provided in the embodiments of this application may be an electronic device, or a functional module capable of invoking a program and executing the program in the electronic device.

In the several embodiments provided in this application, it should be understood that the disclosed apparatus and method may be implemented in another manner. For example, the apparatus embodiment described above is merely an example. For example, the division into the modules or units is merely logical function division, and there may be another division manner in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or the units may be implemented in an electrical form, a mechanical form, or another form.

The units described as separate components may or may not be physically separate, and components displayed as units may or may not be physical units, that is, may be located in one position, or may be distributed on a plurality of network units. Some or all of the units may be selected based on actual requirements to achieve the objectives of the solutions in the embodiments.

In addition, the functional units in the embodiments of this application may be integrated into one processing unit, or each unit may exist alone physically, or two or more units may be integrated into one unit. The integrated unit may be implemented in the form of hardware, or may be implemented in a form of a software functional unit.

When an integrated unit is implemented in a form of a software functional unit and sold or used as an independent product, the integrated unit may be stored in a computer readable storage medium. Based on such understanding, the technical solutions of this application essentially, or the part contributing to the conventional technology, or some of the technical solutions may be implemented in a form of a computer software product. The computer software product is stored in a storage medium, and includes several instructions for instructing a computer device (which may be a personal computer, a server, a network device, or the like) to perform all or some of the steps of the method described in embodiments of this application. The foregoing storage medium may include but is not limited to various media that can store program code, such as a USB flash drive, a removable hard disk, a ROM, a RAM, a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of the present application shall be subject to the protection scope of the claims.

## Claims

1. An operation response method, applied to a terminal device, wherein a side of the terminal device is provided with a pressure-sensitive key, and the method comprises:
displaying a first interface, wherein the first interface comprises a desktop;
receiving a first slide operation acting on the pressure-sensitive key; and
dropping down and displaying the notification center and/or the control center from a top of the first interface in response to the first slide operation.

2. The method according to claim 1, wherein a first side of the terminal device is provided with a first pressure-sensitive key, and a second side of the terminal device is provided with a second pressure-sensitive key; and
the dropping down and displaying the notification center and/or the control center from a top of the first interface in response to the first slide operation comprises:
dropping down and displaying the notification center from the top of the first interface in response to the first slide operation acting on the first pressure-sensitive key; and
dropping down and displaying the control center from the top of the first interface in response to the first slide operation acting on the second pressure-sensitive key.

3. The method according to claim 1 or 2, wherein before the receiving a first slide operation acting on the pressure-sensitive key, the method further comprises:
receiving a first press operation acting on the pressure-sensitive key, wherein the first press operation is a press operation whose press pressure satisfies a first preset condition, and/or whose press duration is greater than or equal to a first duration threshold; and
the dropping down and displaying the notification center and/or the control center from a top of the first interface in response to the first slide operation comprises:
dropping down and displaying the notification center and/or the control center from the top of the first interface in response to the first slide operation acting on the pressure-sensitive key after the first press operation.

4. The method according to claim 3, wherein the method further comprises:
displaying a dynamic focus effect at the top of the first interface in response to the first press operation.

5. The method according to claim 4, wherein the displaying a dynamic focus effect at the top of the first interface comprises:
displaying a dynamic focus effect in a first partial region of a status bar of the first interface when the pressure-sensitive key is disposed on a left side of the terminal device, wherein the first partial region is located on a left side of the status bar; and
displaying a dynamic focus effect in a second partial region of a status bar of the first interface when the pressure-sensitive key is disposed on a right side of the terminal device, wherein the second partial front region is located on a right side of the status bar.

6. The method according to any one of claims 3 to 5, wherein the method further comprises:
controlling, in response to the first press operation, the pressure-sensitive key to perform a vibrational feedback.

7. The method according to any one of claims 1 to 6, wherein after the dropping down and displaying the notification center and/or the control center from a top of the first interface in response to the first slide operation, the method further comprises:
receiving a second slide operation acting on the pressure-sensitive key, wherein a slide direction of the second slide operation is opposite to that of the first slide operation; and
canceling displaying of the notification center and/or the control center in response to the second slide operation.

8. The method according to claim 7, wherein before the receiving a second slide operation acting on the pressure-sensitive key, the method further comprises:
receiving a second press operation acting on the pressure-sensitive key, wherein the second press operation is a press operation whose press pressure satisfies a second preset condition, and/or whose press duration is greater than or equal to a second duration threshold; and
the canceling displaying of the notification center and/or the control center in response to the second touch operation comprises:
canceling displaying of the notification center and/or the control center in response to the second slide operation acting on the pressure-sensitive key after the second press operation.

9. The method according to any one of claims 1 to 8, wherein the method further comprises:
displaying a second interface, wherein the second interface is a video playback interface;
receiving a slide operation acting on the pressure-sensitive key; and
switching a currently played video to a previous video or a next video of the video in response to the slide operation on the pressure-sensitive key.

10. The method according to claim 9, wherein the video playback interface is a short-form video playback interface, and the video is a short-form video; and the switching a currently played video to a previous video or a next video of the video in response to the slide operation on the pressure-sensitive key comprises:
gradually moving a page of the short-form video out from a top of the second interface and gradually moving a page of the next short-form video of the short-form video in from a bottom of the second interface in response to a third slide operation acting on the pressure-sensitive key, to switch the short-form video to the next short-form video of the short-form video; and
gradually moving a page of the short-form video out from the bottom of the second interface and gradually moving the previous short-form video of the short-form video in from the top of the second interface in response to a fourth slide operation acting on the pressure-sensitive key, to switch the short-form video to the previous short-form video of the short-form video, wherein a slide direction of the third slide operation is opposite to a slide direction of the fourth slide operation.

11. The method according to any one of claims 1 to 10, wherein the method further comprises:
displaying a third interface, wherein the third interface is a camera shooting interface;
receiving a slide operation acting on the pressure-sensitive key; and
adjusting a focal length of a camera in response to the slide operation on the pressure-sensitive key.

12. The method according to claim 11, wherein the adjusting a focal length of a camera in response to the slide operation on the pressure-sensitive key comprises:
increasing the focal length of the camera in response to a fifth slide operation acting on the pressure-sensitive key; and
reducing the focal length of the camera in response to a sixth slide operation acting on the pressure-sensitive key, wherein a slide direction of the sixth slide operation is opposite to a slide direction of the fifth slide operation.

13. The method according to any one of claims 1 to 12, wherein the method further comprises:
displaying a fourth interface, wherein the fourth interface comprises a first image;
receiving a slide operation acting on the pressure-sensitive key; and
zooming and displaying the first image in response to the slide operation on the pressure-sensitive key.

14. The method according to claim 13, wherein the zooming the first image in response to the slide operation on the pressure-sensitive key comprises:
zooming in and displaying the first image in response to a seventh slide operation acting on the pressure-sensitive key; and
zooming out and displaying the first image in response to an eighth slide operation acting on the pressure-sensitive key, wherein a slide direction of the eighth slide operation is opposite to a slide direction of the seventh slide operation.

15. The method according to any one of claims 1 to 14, wherein the side of the terminal device that is provided with the pressure-sensitive key does not comprise a physical key.

16. The method according to any one of claims 1 to 15, wherein an operating system of the terminal device comprises an input reader and a system user interface; and
the dropping down and displaying the notification center and/or the control center from a top of the first interface in response to the first slide operation comprises:
receiving, by the input reader, slide data reported by a pressure-sensitive device driver corresponding to the pressure-sensitive key, and generating a screen slide event according to the slide data, wherein the slide data is slide data generated by the first slide operation acting on the pressure-sensitive key;
sending, by the input reader, the screen slide event to the system user interface; and
dropping down and displaying, by the system user interface, the notification center and/or the control center from the top of the first interface in response to the screen slide event.

17. The method according to claim 16, wherein the generating, by the input reader, a screen slide event according to the slide data comprises:
processing, by the input reader, the slide data according to a preset mapping parameter, to obtain an event parameter of the screen slide event, wherein the preset mapping parameter is used for mapping a slide event on the pressure-sensitive key to a slide event on a screen; and
generating, by the input reader, the screen slide event according to the event parameter.

18. The method according to claim 16 or 17, wherein when the pressure-sensitive key is the pressure-sensitive key disposed on the first side of the terminal device, the screen slide event is a slide-down event on a left side of the screen; and
the dropping down and displaying, by the system user interface, the notification center and/or the control center from the top of the first interface in response to the screen slide event comprises:
dropping down and displaying, by the system user interface, the notification center from the top of the first interface in response to the screen slide event.

19. The method according to claim 16 or 17, wherein when the pressure-sensitive key is the pressure-sensitive key disposed on the second side of the terminal device, the screen slide event is a slide-down event on a right side of the screen; and
the dropping down and displaying, by the system user interface, the notification center and/or the control center from the top of the first interface in response to the screen slide event comprises:
dropping down, by the system user interface, the control center from the top of the first interface in response to the screen slide event.

20. The method according to any one of claims 16 to 19, wherein the operating system further comprises a phone window manager, and before the receiving a first slide operation acting on the pressure-sensitive key, the method further comprises:
receiving, by the pressure-sensitive key, a first press operation, wherein the first press operation is a press operation whose press duration is greater than or equal to the first duration threshold;
receiving, by the input reader, an original key event reported by the pressure-sensitive device driver corresponding to the pressure-sensitive key, and generating a first key event according to the original key event, wherein the original key event is a key event generated by the first press operation acting on the pressure-sensitive key;
sending, by the input reader, the first key event to the phone window manager;
performing, by the phone window manager, gesture detection according to the first key event, and sending a first notification to the system user interface when a long-press gesture is detected, wherein the first notification is used for indicating that the long-press gesture is detected on the pressure-sensitive key, and the long-press gesture is a press gesture of continuously pressing the pressure-sensitive key for the first duration threshold; and
displaying, by the system user interface, a dynamic focus effect at the top of the first interface in response to the first notification.

21. The method according to claim 20, wherein the first key event is a first key down event, and the performing, by the phone window manager, gesture detection according to the first key event comprises:
determining, by the phone window manager, that the long-press gesture is detected if a first key up event corresponding to the first key down event is not received within a first duration threshold after the first key down event is received; or
determining, by the phone window manager, that the long-press gesture is not detected if a first key up event corresponding to the first key down event is received within a first duration threshold after the first key down event is received.

22. The method according to claim 20 or 21, wherein the displaying, by the system user interface, a dynamic focus effect at the top of the first interface in response to the first notification comprises:
displaying a dynamic focus effect in a first partial region of a status bar of the first interface when the first notification indicates that the long-press gesture is detected on the first pressure-sensitive key, wherein the first pressure-sensitive key is a pressure-sensitive key disposed on the first side of the terminal device, and the first partial region is located on a left side of the status bar; and
displaying a dynamic focus effect in a second partial region of a status bar of the first interface when the first notification indicates that the long-press gesture is detected on the second pressure-sensitive key, wherein the second pressure-sensitive key is a pressure-sensitive key disposed on the second side of the terminal device, and the second partial region is located on a right side of the status bar.

23. The method according to any one of claims 20 to 22, wherein the operating system further comprises a vibrator manager service; and the method further comprises:
sending, by the phone window manager, a second notification to the vibration management server when the long-press gesture is detected, wherein the second notification is used for indicating that the long-press gesture is detected; and
controlling, by the vibration manager service according to the second notification, the pressure-sensitive key to vibrate.

24. A terminal device, wherein the terminal device comprises: one or more processors and a memory, wherein
the memory is coupled to the one or more processors, the memory is configured to store computer program code, the computer program code comprises a computer instruction, and the one or more processors invoke the computer instruction to enable the terminal device to perform the method according to any one of claims 1 to 23.

25. A computer-readable storage medium, comprising instructions, wherein when the instructions are run on an electronic device, the electronic device is enabled to perform the method according to any one of claims 1 to 23.
